# EUROPEAN PATENT APPLICATION

(11) **EP 4 651 549 A1**
(43) Date of publication of application: **19.11.2025**
(21) Application number: 24741615.9
(22) Date of filing: 03.01.2024
(51) Int. Cl.: H04W 24/08, H04W 24/10, H04W 60/00, H04W 4/08

(54) **SENSING MEASUREMENT**

(30) Priority: 09.01.2023 US 202363437753 P; 08.06.2023 US 202363471763 P
(71) Applicant: LG Electronics Inc., Yeongdeungpo-gu Seoul 07336 (KR)
(72) Inventor: NOH, Yujin, Seoul 06772 (KR); LEE, Ki-Dong, Seoul 06772 (KR)
(74) Representative: Plasseraud IP
(86) International application number: PCT/KR2024/000084
(87) International publication number: WO 2024/150993

(57) **Abstract**

One embodiment of the present disclosure provides a method by which a first device performs communication. The method may comprise steps in which: a UE performs a registration procedure for registering in an AMF node; sensing measurement setting information is transmitted to a sensing group including a second device; a first sensing signal is transmitted to the second device; first measurement data is received from the second device; and a first timer based on a first time interval is started on the basis that the measurement data has been received.

## Description

### TECHNICAL FIELD

The present disclosure relates to a radio communication.

### BACKGROUND ART

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

In the past, only non-3GPP signals were used as a technology for sensing objects that did not have a communication module. There is no specific method for supporting sensing based on 3GPP signals.

### DISCLOSURE

### TECHNICAL SOLUTION

In one embodiment, a method, by a first device, for performing communication is provided. The method may include: performing a registration procedure for the UE to register with the AMF node; transmitting sensing measurement configuration information to a sensing group including the second device; transmitting a first sensing signal to the second device; receiving first measurement data from the second device; and starting a first timer based on a first time interval based on the reception of the measurement data.

In another embodiment, an apparatus implementing the method is provided.

In one embodiment, a method is provided for performing communication by a second device. The method may include: performing a registration procedure for the UE to register with the AMF node; receiving sensing measurement configuration information from the first device; transmitting a first sensing signal from the first device; generating first measurement data based on the first sensing signal; and transmitting the first measurement data to the first device.

In another embodiment, an apparatus implementing the methods are provided.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of 5G system architecture to which implementations of the present disclosure is applied.
FIGS. 5 and 6 show an example of a registration procedure to which implementations of the present disclosure is applied.
FIG. 7 shows a procedure of performing V2X or SL communication by a UE based on a transmission mode, based on an embodiment of the present disclosure.
FIG. 8 illustrates an example of a group communication setup procedure according to an example of the present disclosure.
FIG. 9 illustrates an example of a sensing measurement process.
FIGS. 10a and 10b show a first example of a procedure related to sensing measurement according to an embodiment of the present disclosure.
FIGS. 11a and 11b show a second example of a procedure related to sensing measurement according to an embodiment of the present disclosure.
FIG. 12 shows a third example of a procedure related to sensing measurement according to an embodiment of the present disclosure.
FIG. 13 shows a fourth example of a procedure related to sensing measurement according to an embodiment of the present disclosure.
FIG. 14 shows a fifth example of a procedure related to sensing measurement according to an embodiment of the present disclosure.
FIG. 15 shows a sixth example of a procedure related to sensing measurement according to an embodiment of the present disclosure.
FIG. 16 shows an example of SMC setup announcement information according to an embodiment of the present disclosure.
FIG. 17 shows an example of a procedure according to an embodiment of the present disclosure.

### MODE FOR INVENTION

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

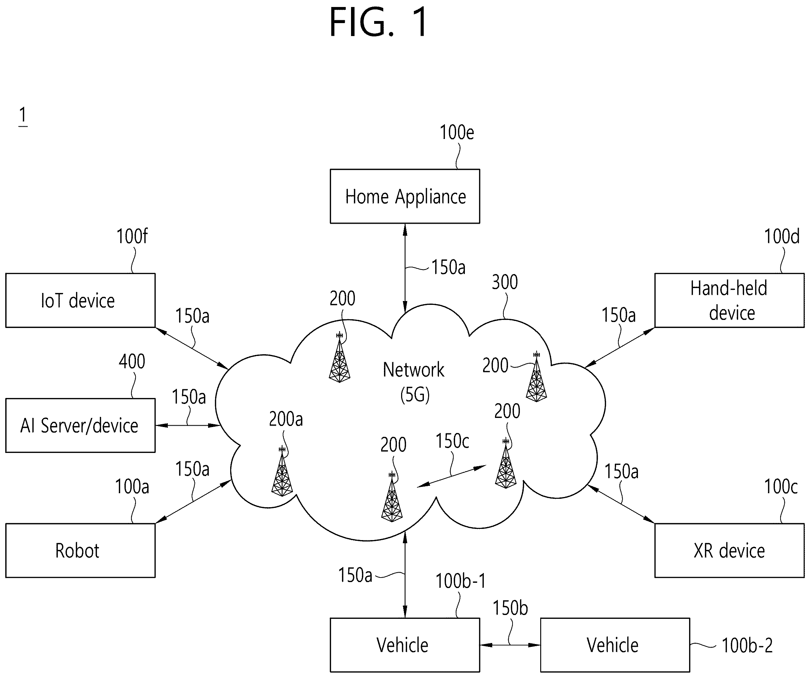

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/5G devices. The wireless devices 100a to 100f may include, without being limited to, a robot 100a, vehicles 100b-1 and 100b-2, an eXtended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without transmitting through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the above-mentioned names. Additionally, and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally, and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate Personal Area Networks (PANs) associated with small/low-power digital communication based on various specifications such as IEEE 802.15.4 and may be called various names.

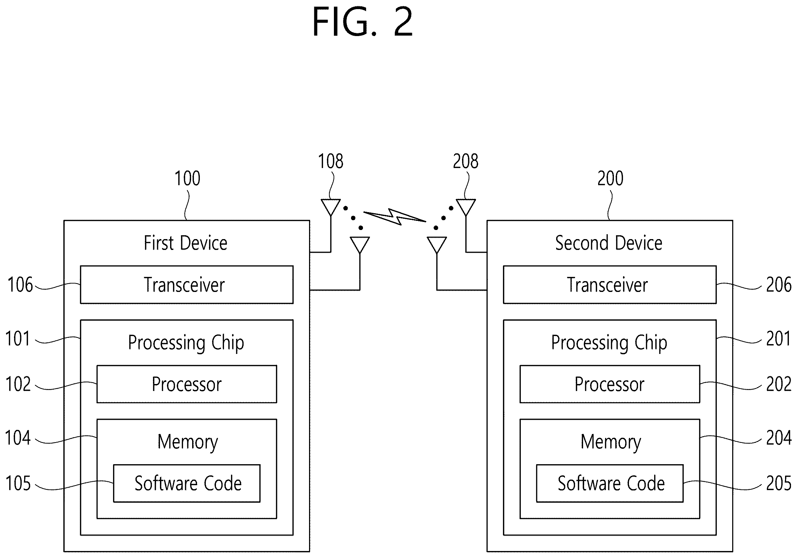

FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally, and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE operation according to an implementation of the present disclosure or control the transceiver(s) 106 to perform the UE operation according to an implementation of the present disclosure. The processor(s) 202 connected to, mounted on or launched in the second wireless device 200 may be adapted to perform the BS operation according to an implementation of the present disclosure or control the transceiver(s) 206 to perform the BS operation according to an implementation of the present disclosure.

In the present disclosure, a BS is also referred to as a node B (NB), an eNode B (eNB), or a gNB.

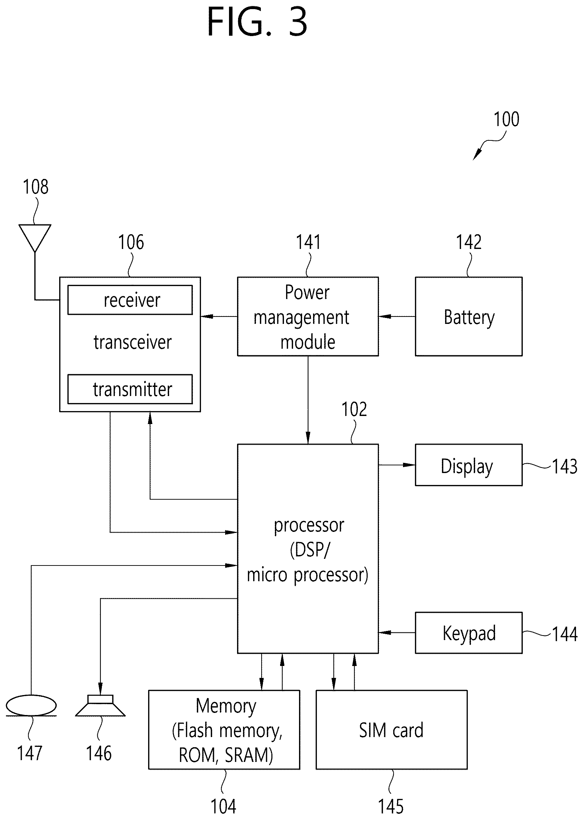

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

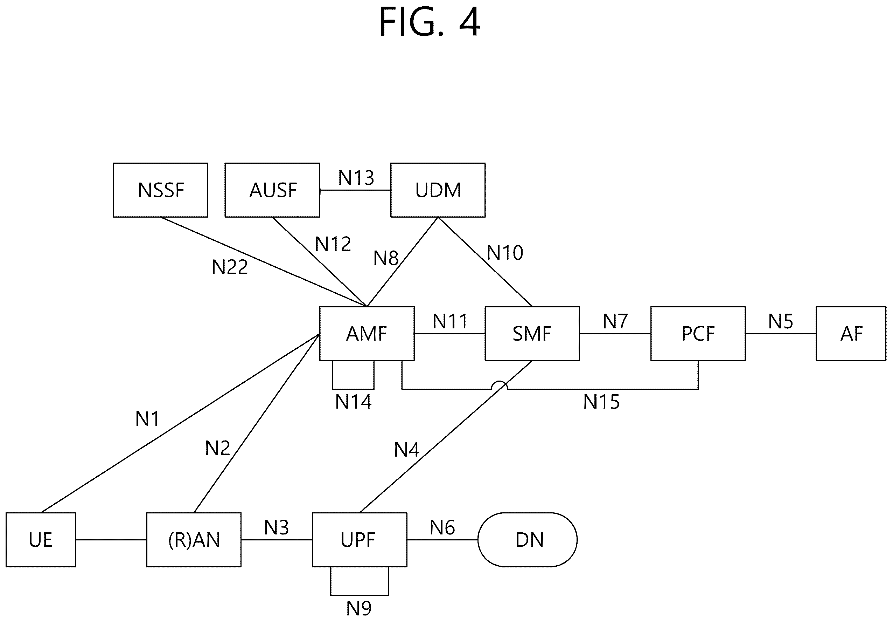

FIG. 4 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture includes the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

A registration procedure is described. Section 4.2.2.2 of 3GPP TS 23.502 V16.3.0 (2019-12) can be referred.

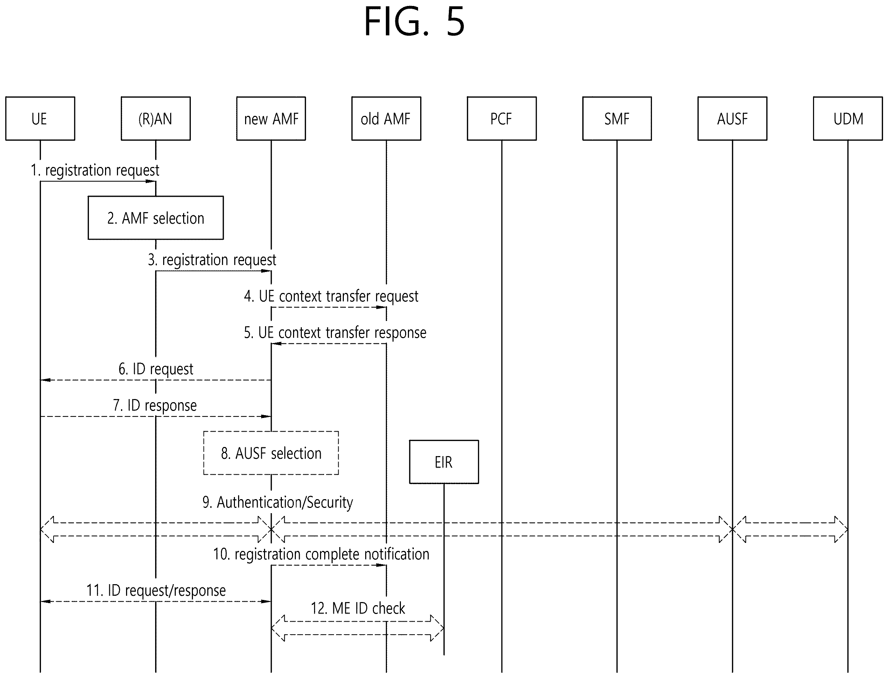

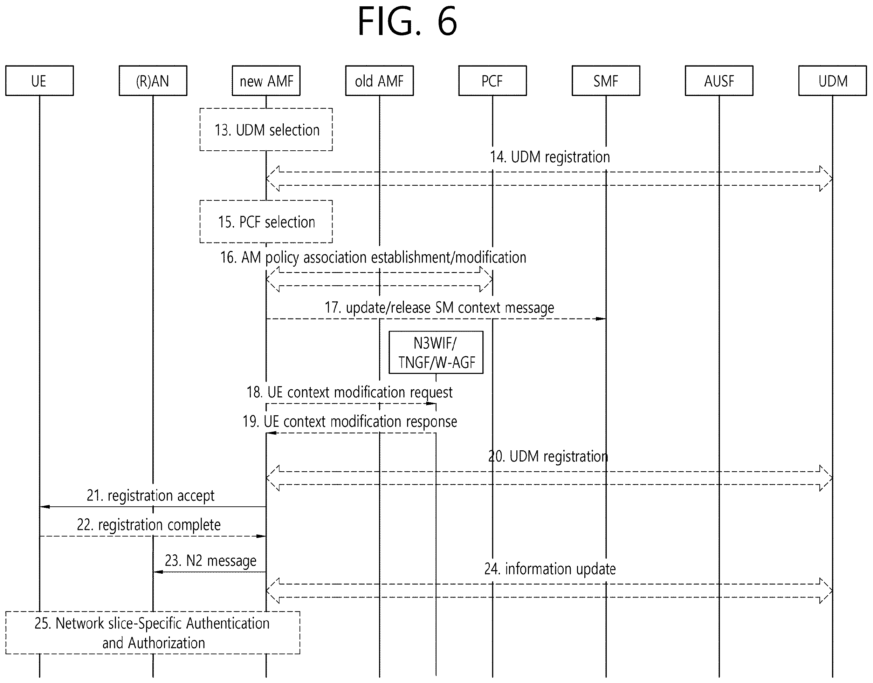

FIGS. 5 and 6 show an example of a registration procedure to which implementations of the present disclosure is applied.

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 5 and 6 applies on all these registration procedures, but the periodic registration update need not include all parameters that are used in other registration cases.

The general registration procedure in FIGS. 5 and 6 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 5 are described.

(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication _UEContextTransfer service operation on the old AMF including the complete registration request non-access stratum (NAS) message to request the UE's SUPI and UE context.

(5) Step 5: The Old AMF may respond to the new AMF for the Namf_Communication UEContextTransfer invocation by including the UE's SUPI and UE context.

(6) Step 6: If the SUCI is not provided by the UE nor retrieved from the old AMF, the identity request procedure may be initiated by the new AMF transmitting the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication _RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF transmitting an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdentityCheck_Get service operation.

Now, procedures of FIG. 6, which follow the procedures of FIG. 5, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_ PDUSession _UpdateSMContext and/or Nsmf_ PDUSession _ReleaseSMContext) to the SMF.

(18) Step 18: If the new AMF and the old AMF are in the same PLMN, the new AMF may transmit a UE Context Modification Request to the N3IWF/TNGF/W-AGF.

(19) Step 19: The N3IWF/TNGF/W-AGF may transmit a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF transmits a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall transmit the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each Single Network Slice Selection Assistance Information (S-NSSAI) of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may transmit a Registration Complete message to the new AMF when it has successfully updated itself.

The UE may transmit a Registration Complete message to the new AMF to acknowledge if a new 5G-GUTI was assigned.

(23) Step 23: For registration over 3GPP Access, if the new AMF does not release the signaling connection, the new AMF may transmit the RRC Inactive Assistance Information to the NG-RAN. For registration over non-3GPP Access, if the UE is also in CM-CONNECTED state on 3GPP access, the new AMF may transmit the RRC Inactive Assistance Information to the NG-RAN.

(24) Step 24: The new AMF may perform information update towards the UDM.

(25) Step 25: The UE may execute Network Slice-Specific Authentication and Authorization procedure.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

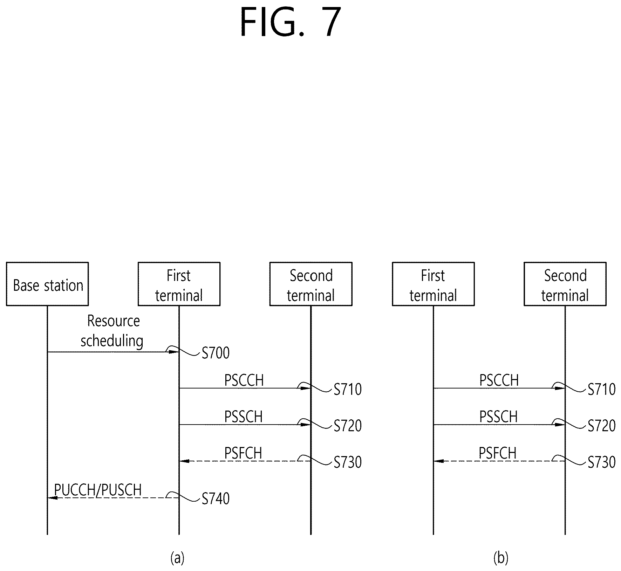

**FIG. 7** **shows a procedure of performing V2X or SL communication by a UE based on a transmission mode, based on an embodiment of the present disclosure.**

The embodiment of FIG. 7 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 7 shows a UE operation related to an LTE transmission mode 1 or an LTE transmission mode 3. Alternatively, for example, (a) of FIG. 7 shows a UE operation related to an NR resource allocation mode 1. For example, the LTE transmission mode 1 may be applied to general SL communication, and the LTE transmission mode 3 may be applied to V2X communication.

For example, (b) of FIG. 7 shows a UE operation related to an LTE transmission mode 2 or an LTE transmission mode 4. Alternatively, for example, (b) of FIG. 7 shows a UE operation related to an NR resource allocation mode 2.

Referring to (a) of FIG. 7, in the LTE transmission mode 1, the LTE transmission mode 3, or the NR resource allocation mode 1, a base station may schedule SL resource(s) to be used by a UE for SL transmission. For example, in step S700, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S710, the first UE may transmit a PSCCH (e.g., sidelink control information (SCI) or 1^{st}-stage SCI) to a second UE based on the resource scheduling. In step S720, the first UE may transmit a PSSCH (e.g., 2^{nd}-stage SCI, MAC PDU, data, etc.) related to the PSCCH to the second UE. In step S730, the first UE may receive a PSFCH related to the PSCCH/PSSCH from the second UE. For example, HARQ feedback information (e.g., NACK information or ACK information) may be received from the second UE through the PSFCH. In step S740, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3 1.

Referring to (b) of FIG. 7, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S710, a first UE which has selected resource(s) from a resource pool by itself may transmit a PSCCH (e.g., sidelink control information (SCI) or 1^{st}-stage SCI) to a second UE by using the resource(s). In step S720, the first UE may transmit a PSSCH (e.g., 2^{nd}-stage SCI, MAC PDU, data, etc.) related to the PSCCH to the second UE. In step S730, the first UE may receive a PSFCH related to the PSCCH/PSSCH from the second UE.

Referring to (a) or (b) of FIG. 7, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Referring to (a) or (b) of FIG. 7, in step S730, the first UE may receive the PSFCH. For example, the first UE and the second UE may determine a PSFCH resource, and the second UE may transmit HARQ feedback to the first UE using the PSFCH resource.

Referring to (a) of FIG. 7, in step S740, the first UE may transmit SL HARQ feedback to the base station through the PUCCH and/or the PUSCH.

In the past, technologies for sensing objects (e.g., environment, people, animals, etc.) that do not have communication modules included radar, lidar, RF, and camera. Cellular networks were only used for data transmission. To sense objects, use cases based on 3GPP signals as well as non-3GPP signals can be discussed. In addition, the performance requirements to satisfy these use cases can be discussed.

No specific measures were discussed to support the 3GPP sensing measurement process based on 3GPP signalling. For example, there was no specific discussion on enhancements to the RAN specifications related to such sensing,

In the various examples of the present disclosure, an example of performing a sensing-related measurement is described. For example, an example of a sensing communication procedure in 3GPP is described. An example of forming a sensing measurement group in the sensing communication procedure is described.

In various examples of the present disclosure, a sensing group can be established. Hereinafter, examples related to the sensing group will be explained. The sensing group can be, for example, a set of sensing transmitters and sensing receivers that can collect sensing data. Here, the locations of the sensing transmitters and sensing receivers can be known.

For example, a sensing group can be used for a sensing service. Based on the sensing group, the sensing service can also make efficient use of resources. For example, in a sensing service, a signal that can only be detected/decoded by members of the sensing group may be transmitted at once. Another example is that for a member of the sensing group who is additionally using its power, a signal that can be terminated at once may be transmitted.

User Equipment (UE) may form or establish a sensing group. For example, the UE may use 3GPP Group Communication System Enablers (GCSE) or '3GPP Group Communication'. The UE may establish a sensing group based on the following example operations:
1) Group Creation Request: A user or UE initiates the group creation process by transmitting a group creation request. This request typically includes information such as the group name, description, and a list of users (UE) who should belong to the group.
2) Authentication and Authorization: The network verifies the user's identity and checks whether the user has the necessary authorization to create a group. This step ensures that only authorized users can create groups.
3) Group Creation: Once the user has been authenticated and authorized, the network creates a new group within the group communication system. The group is assigned a unique group ID and other necessary parameters are configured.
4) Group Invitation: Once a group is created, the user (or UE) who started the group can transmit invitations to other UEs to join the group. These invitations can be sent via various communication channels within the group communication application, such as SMS, push notifications, or direct messages.
5) UE Acceptance: An invited UE can accept or reject the invitation. If the UE accepts, it is added to the group by the network. If the UE rejects, it remains outside the group.
6) Group Configuration: The creator of a group (e.g., the UE that sent the invitation) can configure various settings for the group, such as group access rights, group roles, and group communication policies, etc. Based on these Configuration, which UE (or user) can transmit messages, which UE (or user) can manage the group, and other aspects of the group's operation, may be determined.
7) Group Communication: Once a group is set up (or configured) and members are added, the UEs within the group can begin to communicate with each other. This communication may include text messages, voice calls, video calls, or multimedia sharing, depending on the capabilities of the group communication system.
8) Group Management: One or more authorized group members can manage the group, such as adding or removing members, changing group settings, and performing other administrative tasks. The creator of the group or a designated administrator may have additional rights to manage the group.
9) Security and Encryption: Group communications in 3GPP networks typically incorporate security measures to protect the confidentiality and integrity of group messages. Encryption and authentication mechanisms are used to ensure that only authorized members can access group content.
10) Termination or Disbanding: A group creator or administrator can terminate a group at any time to delete all members and dissolve the group. This may be necessary for a variety of reasons, such as the group's purpose being achieved or membership changing.

For reference, the UE operations described above are only examples, and the scope of the present disclosure is not limited by the above operations. For example, only some of the operations described above may be performed.

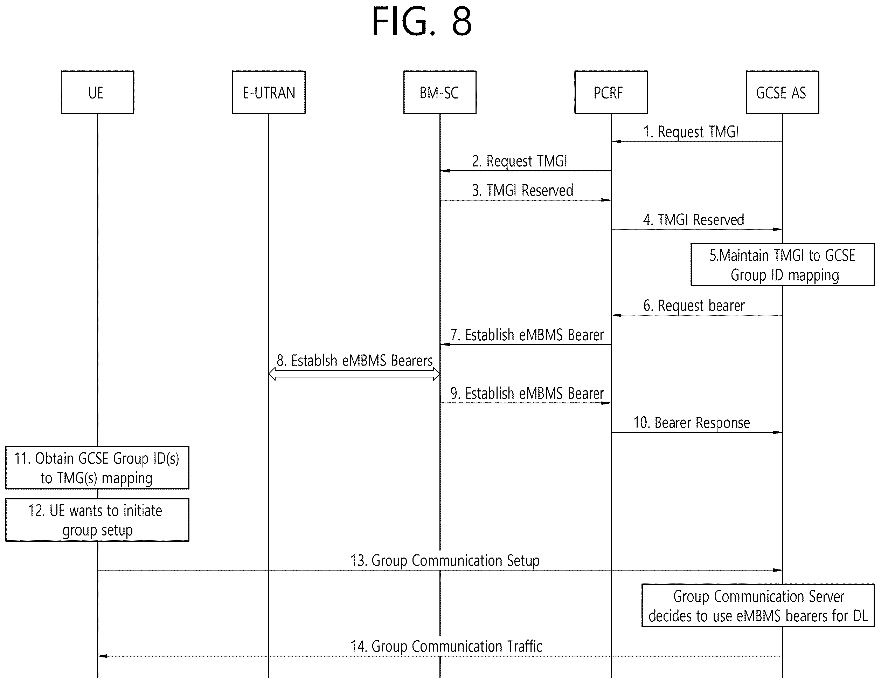

Below, with reference to the example in FIG. 8, an example of group communication setup using eMBMS bearers is shown. For reference, the following example can be performed in a similar manner in a 5G network.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 8** **illustrates an example of a group communication setup procedure according to an example of the present disclosure.**

The example in FIG. 8 is an example of setting up group communications using pre-established eMBMS bearers.

The interaction between the UE and the GCSE AS is illustrated in the example in FIG. 8.

Note that EMBMS refers to Evolved Packet System MBMS, GCSE AS refers to Group Communication System Enablers (GCSE) Application Server (AS), MBMS refers to Multimedia Broadcast/Multicast Service, MBSFN refers to MBMS over a Single Frequency Network, MuSe refers to Multipoint Service

1-4. The GC server requests a TMGI for the GCSE group from the BM-SC through the PCRF. For example, the GCSE AS may transmit a TMGI request message to the BM-SC through the PCRF. The MB-SC may transmit a TMGI reserved message to the GCSE AS through the PCRF.

5. The GC server maintains a mapping of TMGI to GCSE group IDs.

6-10. A pre-established bearer is set up for the group. The MBSFN area is based on the eNB that was pre-selected for this GCSE GC as provided to the BM-SC. When triggered by Step 8, the E-UTRAN transmits the MBMS-related system information and MCCH configuration information over the air.

The GCSE AS transmits a bearer request to the PCRF. The PCRF transmits an eMBMS bearer establishment message to the BM-SC. The BM-SC and the E-UTRAN establish an eMBMS bearer. The BM-SC transmits an eMBMS bearer establishment message to the PCRF. The PCRF may transmit a bearer response message to the GCSE AS.

The UE periodically monitors the MCH scheduling information (MSI) to detect if the TMGI associated with the MTCH has been scheduled.

The UE's GCSE application registers with the GCSE application server.

The registration message may include all group identifiers of interest to the UE.

12. The TMGI(s) of the GCSE group are returned to the UE if available.

The UE maintains a mapping of TMGI to GCSE group identifiers.

13. the UE monitors the network to determine the availability of eMBMS transmissions corresponding to the TMGI of the GCSE group of interest. The UE initiates the group communication established for the specific GCSE group using the unicast UL bearer. The UE also indicates the availability of the eMBMS transport corresponding to the TMGI of the GCSE group in the group establishment signaling.

The GCSE AS determines whether to use the preset eMBMS bearer for the downlink. When E-UTRAN detects that data is coming from the network, E-UTRAN modifies the MSI to inform the UE of the schedule. The UE receives the MSI and tunes to the MTCH.

The following describes an example procedure for setting up group communication using multiple unicast bearers. In the following examples, the maximum number of UEs that can participate in the group communication may be less than the maximum number of UEs according to the example of FIG. 8.

The following solution/option does not use eMBMS, but instead uses multiple unicast bears to distribute downlink media. This option is suitable when there are not many UEs in the group.

GCSE AS counting of UEs per group per cell is described.
a) For example, when a public safety user's shift begins, the user "clocks on" and an IMS-style signal is used to register the user/device. Then, in the event of an eMBMS, an IMS-style signal is used to inform the device of the TMGI and decryption key that can be used.
   NOTE 1: The term "IMS-style signaling" refers to, for example, the use of SIP messages and/or IMS authentication and/or the use of QCI 5 as a bearer for SIP signaling.
b) The MME instructs EUTRAN to keep this UE in the RRC connection state. A subscription record in the HLR for a GC-only APN or an indication of a GCSE AS (e.g., Rx/Gx/S5-S8/S11 message) may transmit the command to the MME to inform the RAN to keep the UE in RRC association.
c1) The RFSP/SPID feature is used to group emergency service users on the same frequency/RAT (typically LTE frequencies that form the "coverage layer" of the network).
c2) Cells in the LTE coverage layer of the network are configured with eMBMS subframes, but the MCCH does not normally signal TMGI.
   NOTE 2: This configuration is considered to consume very little radio resources if there are a significant number of Rel 10 or higher mobiles in the cell. The battery impact on the UE is small when TMGI is not signaling (MCCH reception is only required every 5.12 seconds).
d) The PDN GW activates ULI reporting procedures, based on cell-based granularity. This activation can be based on APNs, or it can be controlled through the interface between the PDN GW and the GCSE AS via Rx/Gx. The latter option enables relaxed location reporting (e.g., TA-based) for devices in the TA list/PLMN that are excluded from the group calling area.
   NOTE 3: As an alternative to network-based ULI reporting, the UE may detect a cell change and notify the UE is in a new cell by transmitting a user data packet to the GCSE AS. Cell change reporting from the RRC layer to the 'upper layer' is a feature supported by the USIM application tool kit and most modern device operating systems/engineering features. However, the RAN signalling load that occurs when switching from connected-DRX mode to data transmission mode each time the cell changes may be slightly higher than the load caused by ULI reporting transmitted during movement within the eNB, and using ULI reporting may reduce the data transmission of the device, thereby improving battery life somewhat. Using this alternative, the network can alleviate the need to keep the mobile in an RRC connected state if the UE uses an idle mode DRX (e.g., 320 ms) that meets the latency requirements of the service.
e) In each user geolocation report, 'GCSE AS' will increment or decrement the counter based on the number of users in each group in each cell.
f) Based on the number of users in groups within a cell (and the cell's RAT), 'GCSE AS' determines whether to distribute future media/data from that cell by
   - An existing established point-to-point bearer, and/or,
   - MBMS broadcast bearer (at this point, step 6 in FIG. 8 occurs and the cell starts broadcasting its group's TMGI on the MCCH, even if no media is present). A single-cell MBSFN area is used because the number of users per group per cell can vary significantly, even within a cell on a single eNodeB.
      When a group spans multiple cells and media is sent to that group, it is expected that some cells will use point-to-point bearers; some cells will use eMBMS bearers; and at least in transient mobility cases, it is normal for some cells to use both point-to-point bearers and eMBMS bearers.
g) Even when eMBMS is in use, the UE may use unicast uplink transmissions to the GCSE AS to ack/nack downlink transmissions. If the eMBMS link quality for a particular UE is insufficient, the GCSE AS may use a point-to-point downlink bearer to transmit media to that UE.

As an additional supplement to the above procedure, if the service used within the group has a requirement for a fast response time (e.g., 300 ms), the subscription record in the HLR (in step b) informs the MME [and SGSN] to instruct the RAN to maintain this UE in an RRC connection based on "a short connected mode DRX".

The following describes in detail the procedures related to sensing measurements according to various examples in the present disclosure.

Next-generation wireless communications are considered a key enabler for emerging applications in various fields such as smart cities, industrial IoT, eHealth, automotive, public safety, and education. Robust sensing capabilities that support applications in these fields are expected to play a key role in meeting the demand for high-quality services based on accuracy in environmental awareness use cases. Therefore, it is necessary to start discussions on the detection of relevant functions, technologies, and feasibility in both cellular and WiFi networks.

The persent disclosure describes a sensing measurement process for collecting sensing measurement data. Here, the sensing measurement data may be data collected on radio/wireless signals affected by an object or environment of interest for sensing purposes (e.g., reflection, refraction, diffraction). Hereinafter, the sensing measurement data may be used/interpreted to represent 3GPP sensing data and/or non-3GPP sensing data. The information derived from sensing measurement data may be the sensing result. Examples of four components for clarifying the sensing measurement process (e.g., sensing initiator, sensing responder, sensing transmitter, and sensing receiver) are introduced below. For reference, these four components are just examples. The scope of the present disclosure is not limited by the following four components. For example, the names of the four components are just examples, and the operations performed by each component described below may be performed by objects with different names. In addition, only one or some of the four components may be used. In addition, the operation of one or more of the four components may be performed by a single entity. For example, all four components may not be used. The following are examples of the four components:
- Sensing initiator: The sensing initiator can be a base station (e.g., eNB or gNB), user equipment (UE), or consumer premise equipment (CPE) that initiates the sensing measurement process.
- Sensing responder: A BS, UE, or CPE that participates in the sensing measurement process by responding to the sensing initiator.
- Sensing transmitter: A sensing transmitter is an entity that transmits a sensing signal to be used by a sensing service for operation. A sensing transmitter can be an NR RAN node or a UE, and a sensing transmitter can be located in the same entity as or different from a sensing receiver. In the sensing measurement process, the BS, UE, or CPE that transmits the sensing signal to be measured can be a sensing transmitter.
- Sensing receiver: A sensing receiver is an entity that receives the sensing signals that the sensing service will use for its operation. The sensing receiver can be an NR RAN node or a UE. The sensing receiver can be located in the same entity as the sensing transmitter or in a different entity. A sensing receiver may be a BS, UE, or CPE that receives a sensing signal transmitted by a sensing transmitter and obtains sensing measurement data in the sensing measurement process.

Devices (BS, UE or CPE) may operate as a sensing initiator, sensing responder, sensing transmitter or sensing receiver during the sensing measurement process.

For example, a sensing initiator initiates a sensing measurement process (e.g., a process using PDSCH, PDCCH, PUSCH, PUCCH, SL-SCH, etc.). The sensing initiator may act as a sensing transmitter, a sensing receiver, both a sensing transmitter and a sensing receiver, or neither a sensing transmitter nor a sensing receiver. The sensing initiator that has access to the sensing measurement data can transmit the sensing measurement data to a service provider (SP) or service consumer via the network, or derive the sensing results on its own.

For example, a sensing responder participates in a sensing measurement process (e.g., a process using PDSCH, PDCCH, PUSCH, PUCCH, SL-SCH, etc.). A sensing responder can act as a sensing transmitter, a sensing receiver, or both a sensing transmitter and a sensing receiver. If a sensing responder acts as a sensing receiver, it can access the sensing measurement data.

For example, a sensing transmitter may transmit a sensing signal (e.g., CSIRS, CSI-IM (CSI for interference management), DMRS, PTRS, or SRS) that is affected by the target or the environment of interest for the purpose of sensing.

For example, the sensing receiver receives the affected sensing signals and reports the sensing measurement data (e.g., PDSCH, PUSCH, SL-SCH, etc.) to the sensing initiator as needed, and the sensing receiver may also access the sensing measurement data.

In various examples of the present disclosure, the initiator and the responder may generally play the roles of transmitter and receiver, respectively. For example, the initiator may be device 1, and the responder may be device 2. However, this is only an example, and the scope of the present disclosure is not limited thereto. The initiator (e.g., device 1) and the responder (e.g., device 2) may be a BS, UE, or CPE. The operation of the devices described in various examples of the present disclosure may also apply to the operation of BS, UE, or CPE. In various examples, the operation of UE may also be performed by BS or CPE. In various examples of the present disclosure, "predetermined" may be interpreted as "set (or configured)". A time interval may also be interpreted as a window.

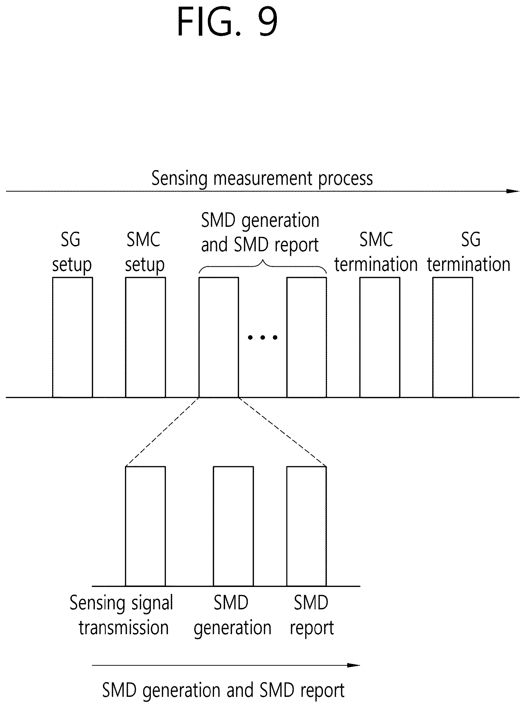

The sensing measurement process is described below, with reference to the example in FIG. 9.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 9** **illustrates an example of a sensing measurement process.**

In the example of FIG. 9, SG stands for Sensing Group. SMC stands for Sensing Measurement Configuration. SMD stands for Sensing Measurement Data.

According to the example of FIG. 9, the sensing measurement process may include one or more of the following steps:
1. If necessary, sensing group (SG in Fig. 9) configuration and sensing group update (e.g., changes to an existing sensing group)
2. sensing measurement configuration (SMC) configuration and SMC update (if necessary)
3. Sensing measurement data (SMD) generation and SMD reporting. SMD generation and reporting may include:
   Sensing signal transmission;
   Sensing measurements for sensing measurement data; and/or
   Sensing measurement data reporting, if required.
4. Sensing measurement configuration termination
5. Sensing group termination

Some of the steps in the above five steps may be repeated, as illustrated in the example of FIG. 9. Some steps may be performed together. For example, the steps of setting up the sensing group and the steps of setting up the SMC may be designed for a single iteration. Optionally, after a single iteration, one or more additional iterations of sensing group updates or one or more additional iterations of SMC updates may follow, if necessary.

To configure a Sensing Group between an Initiator and one or more Responders, the Initiator may send Sensing Group Establishment Request information. The sensing group setup request information may include a first sensing group setup ID.

The Sensing Group Setup ID may be jointly encoded with a portion of the setup request information (e.g., a CRC scrambled by the Sensing Group Setup ID). In response to the Sensing Group Setup Request Information, the one or more Responders may transmit Sensing Group Setup Response Information with the first Sensing Group Setup ID.

Sensing group configuration response information may include subscription acceptance status, subscription rejection status, and subscription adjustment status under specific conditions. Sensing group configuration response information may be transmitted within the first type of DCI format.

The first sensing group setup ID can be CRC scrambled in the first type of DCI. The initiator can transmit the sensing group setup completion information together with the first sensing group setup ID to one or more responders that responded with an accept status or an adjustment status.

For additional tasks in sensing group setup, the initiator can update the responder-related information for the sensing group with the first sensing group setup ID. For any reason, one or more responders may join or leave the sensing group. If the number of responders is greater than or equal to the first threshold, the above request-response-complete process may not be repeated.

The first threshold can be configured as an RRC parameter (e.g., RRC common parameter or RRC UE-specific parameter). Subsequently, when the gNB participates in the sensing measurement process as a responder, an RRC UE-specific parameter (e.g., RRC responder/receiver parameter) for the gNB can be used/interpreted.

If no threshold is defined, the threshold can be 1 or equal to a specific value. For additional sensing group setup tasks, sensing group setup using the first sensing group setup ID can be initiated before the end of the sensing group setup using the first sensing group setup ID. Here, a single responder can participate in more than one sensing group at the same time.

After successfully sensing group configuration, the sensing measurement configuration setup follows. In the present disclosure, sensing measurement configuration setup can be started based on sensing measurement configuration announcement information to be transmitted by multicast or unicast to devices that have joined the sensing group confiugred in the previous step.

The sensing measurement process can consider sensing measurement data that needs to be measured and reported in a timely manner even in dynamically or continuously changing situations. Time-sensitive parameters to be displayed/configured for sensing signal transmission and sensing measurement data reporting can be dynamically updated/instructed according to the latest situation.

In order to perform periodic CSI reporting on PUCCH, when the UE is semi-statically configured by a higher layer (e.g., RRC common parameters or RRC UE-specific parameters), the set values may rarely be changed or updated after the system is deployed.

Since the configuration parameters for the sensing measurement process must be considered time-sensitive, the present disclosure provides a signaling method that supports the transmission of periodic sensing signals to be measured and dynamically supports the reporting of sensing measurement data. In 3GPP, sensing measurement data is not limited to CSI information, and its scope of application can be expanded.

In addition, various timers can be used to immediately and efficiently perform the following actions to support periodic sensing signal transmission and sensing measurement data reporting. When there is no HARQ operation, this method supports more efficient operation by preventing unnecessary delays between the initiator and one or more responders. In this case, some of the HARQ-related information fields in a specific DCI format can be reinterpreted to support a new form of information.

In the various examples described below, only some of the time slots of different options may be used jointly or separately. The various drawings in the present disclosure illustrate examples of the proposed procedure between groups of devices (e.g., UE groups). However, the entities performing the various operations described below may be gNB or 3GPP entities rather than UEs for each communication entity (or part thereof).

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

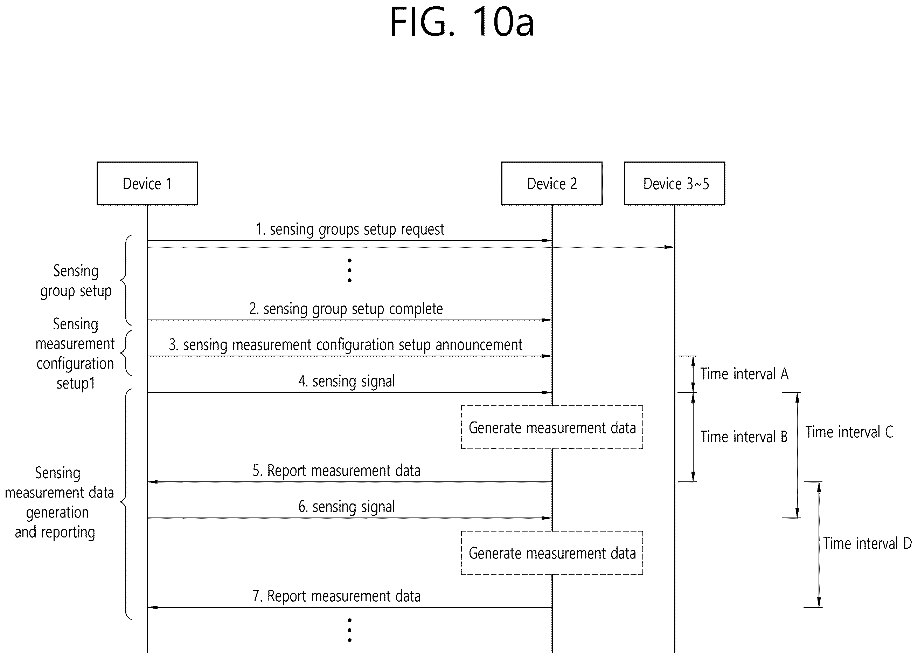

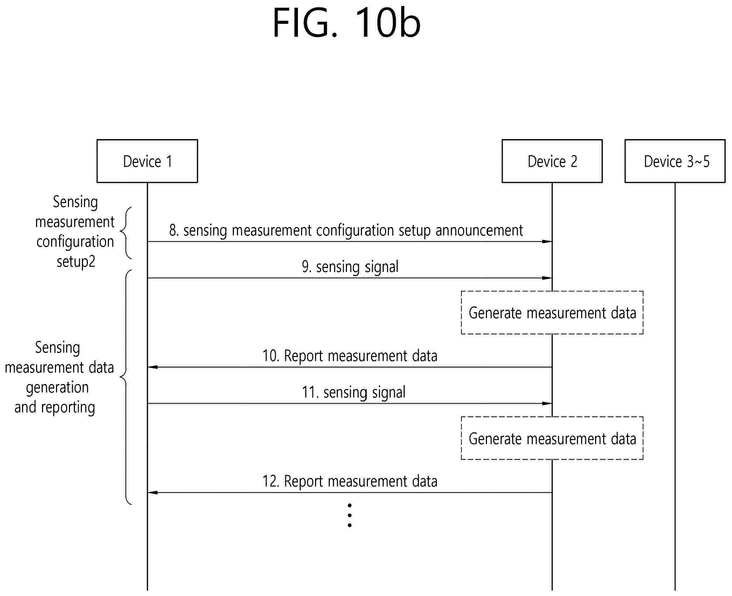

**FIGS. 10a** **and** **10b** **show a first example of a procedure related to sensing measurement according to** an **embodiment of the present disclosure.**

1. Device 1 can send a sensing group setup request message to one or more candidate responders (e.g., devices 2 to 5). Device 1 can transmit this message to the candidate responders. Note that if the only candidate responder is Device 2, Device 1 may not transmit the sensing group setup request message to Device 3. The sensing group setup request message may include a sensing group ID. Responders may decide whether to join the sensing group based on the sensing group ID.

2. Device 1 may transmit a sensing group setup complete message. Device 1 may transmit a sensing group setup complete message to devices included in the sensing group.

3. Device 1 may transmit sensing measurement configuration (hereinafter referred to as SMC) setup announcement information.

When the initiator transmits the sensing measurement configuration setup announcement information, the SMC setup procedure can begin.

Sensing measurement configuration setup announcement information may include a sensing group setup ID.

Sensing measurement configuration setup announcement information may include a first sensing measurement configuration setup ID. The first sensing measurement configuration setup ID may be encoded jointly with a portion of the sensing measurement configuration setup announcement information (e.g., CRC scrambled by the first sensing measurement configuration setup ID). When an SMC setup ID is assigned to a sensing group, this announcement information can remain the same until the corresponding sensing measurement configuration is terminated.

The SMC setup announcement information may include the type of sensing measurement data to be measured. Here, the type of sensing measurement data may be, for example, channel state information such as average SNR-related information, channel quality-related information, precoding matrix-related information, layer-related information, rank-related information. The type of sensing measurement data can be configured/set using RRC parameters (e.g., RRC common parameters or RRC UE-specific parameters). The type of sensing measurement data can be transmitted in the first type of DCI format. The first sensing measurement configuration setup ID can be CRC scrambled in the first type of DCI.

During sensing group setup, a responder (e.g., device 2) participating in the sensing process may receive SMC setup announcement information. In response, the responder (e.g., device 2) may transmit SMC setup completion information to device 1. The response sensing measurement configuration setup completion information may indicate that the responder accepts the configuration parameters set by the initiator.

4. Device 1 can transmit sensing signals. The receiver can perform measurements based on the sensing signals.

5. The receiver can transmit measurement data to the transmitter.

6. Device 1 may transmit a second sensing signal to device 2. The receiver may perform measurements based on the sensing signal.

7. The receiver may transmit measurement data to the transmitter.

8. Device 1 may also perform SMC setup 2. Device 1 may transmit SMC setup announcement information to device 2.

9. Device 1 may transmit a sensing signal. The receiver may perform a measurement based on the sensing signal.

10. The receiver may transmit the measurement data to the transmitter.

11. Device 1 may transmit a second sensing signal to device 2. The receiver may perform measurements based on the sensing signal.

12. The receiver may transmit the measurement data to the transmitter.

The first example of the present disclosure is described below.

The first example of the present disclosure can be applied to sensing measurements such as those shown in FIGS. 10a and 10b. The first example of the present disclosure can also be referred to as Option 1.

SMC setup notification information may include information that supports periodic sensing signal transmission and periodic sensing measurement data reporting procedures that have been updated (or are new) in accordance with the purpose of the service or the appropriate level of service. This information may also be included for the same service. Assuming that there are users (including service providers) with sensing capable entities, when a user decides to participate in a specific service, the user of the sensing capable entity can choose how many sensing capable entities to allocate to support/consume resources.

For example, a sensing capable entity may participate in a sensing service only at a specific location restricted by a user or during a specific sensing time (e.g., weekdays from 9 a.m. to 5 p.m.). In the examples shown in FIGS. 10a and 10b, device 1 may be the initiator and transmitter, and device 2 may be the responder and receiver. Even if only one device (e.g., UE, base station, etc.) acts as the receiver or responder, the same type of information may apply to each responder and receiver within the group.

To support dynamic operations that detect measurement data, the relevant information (e.g., SMC setup announcement information or some or all of the information included in the SMC setup announcement information) may be configured by the MAC CE (Control Element), existing DCI with a new interpretation, or a new type of DCI for PDCCH (or PUCCH or all resources if necessary in the future). SMC setup announcement information may include information supporting periodic sensing signal transmission and periodic sensing measurement data reporting procedures.

When reusing existing DCIs, an RRC common parameter or RRC UE-specific parameter may be configured to indicate whether dynamic operation is enabled to use existing DCIs in the sensing measurement process. When reinterpreting existing DCIs, one of the reserved bits or fields may be considered to indicate the DCI format to be used in the sensing measurement process.

For example, some fields may be reinterpreted for new purposes. For example, some reserved bits may be used for new purposes. The value set of MAC-CE, existing DCIs with interpretations, or new types of DCIs may be configured by RRC common or RRC UE-specific parameters. The one or more time intervals described below may be configured by RRC common or RRC UE-specific parameters. The one or more time intervals described below may be represented in MAC CE or DCI format.

The information (e.g., SMC setup announcement information) may include the location of the resource element (or resource block) to be allocated to the first sensing signal. Alternatively, the information (e.g., SMC setup announcement information) may include a predetermined pattern (e.g., periodic sensing signal) of the sensing signal to be measured by the receiver (e.g., device 2 in Fig. 10a and Fig. 10b).

The location can be identified by searching the search space, such as PDCCH monitoring for COntrol REsource SET (CORESET), to find the DCI. Here, the location may refer to the location where DCI information is assigned. The device can identify the location according to predetermined rules based on information related to frequency and time.

CORESET is a set of physical resources (i.e., specific areas of the downlink resource grid) and a set of parameters used to carry PDCCH/DCI. The CORESET area is limited to a specific area of the frequency domain.

The information (e.g., SMC setup announcement information) may include the third time interval (e.g., time interval C) shown in Fig. 10a and Fig. 10b. The third time interval is a value representing a predetermined interval between sensing signals. For example, sensing signals are periodically transmitted from a transmitter (e.g., device 1). In addition to the third time interval, the SMC announcement information may include maximum reset count N3 information. Here, the maximum reset count N3 may indicate that the receiver can wait without receiving the next sensing signal N3 times. Assuming that the value of N3 is semi-static regardless of the third time interval C, it may be set by RRC common parameters or RRC UE-specific parameters.

The sensing signals may be transmitted periodically or in a predetermined pattern.

Upon receiving the first sensing signal, a timer for a third time interval (e.g., time interval C) may be started. The timer may be driven by the receiver.

The timer starts from an initial value (e.g., 0).

The third time interval may include a predefined offset value.

The predefined offset value α3 may be included separately in the sensing measurement configuration information. The predefined offset value may be set by RRC common or RRC UE-specific parameters.

When the receiver receives the second sensing signal, the timer stops and is reset to its initial value.

When time interval C expires, the following operations may apply:
- The receiver may reset the timer to its initial value. The receiver may wait for the next sensing signal and start the timer.
- The receiver can terminate the sensing measurement configuration. For example, the termination time can be based on the maximum number of resets (e.g., N3 above). The maximum number of resets can be determined (or negotiated) between the initiator and the responder during the sensing measurement configuration. For example, the receiver can terminate the sensing measurement configuration after waiting for N3 x the third time interval + α3. For example, termination may be an efficient option when an object is detected or when the responder moves (e.g., when a UAV (unmanned aerial vehicle or drone) is used as the responder).
- This timer allows the receiver to know exactly when to monitor (or exit sleep mode). Based on the timer, the receiver can operate in a power-efficient manner by receiving sensing signals.

The information (e.g., SMC setup announcement information) may include a first time interval (e.g., time interval A) shown in Fig. 10a and Fig. 10b. Here, the receiver (e.g., device 2 in Fig. 10a and Fig. 10b) may expect to receive the first sensing signal within time interval A. SMC announcement information may include information specifying the maximum reset count N1, which is the number of times the receiver can wait without receiving the next sensing signal N1 times using the first sensing signal. Assuming that the value of N1 is semi-static regardless of the first time interval A, it may be set by RRC common or RRC UE-specific parameters.

When a sensing measurement configuration setup announcement is received, the receiver can start a first timer for a first time interval (e.g., time interval A). The timer starts from a first initial value (e.g., 0).

The first time interval may include a predefined offset value.

The predefined offset value α1 may be included separately in the sensing measurement configuration setup information as an additional time offset. The predefined offset value may be set by RRC common or RRC UE-specific parameters.

When the receiver receives the first sensing signal, the receiver may stop the first timer and reset the timer to the first initial value.

When a timer based on the first time interval (e.g., time interval A) expires, the following operations may be applied:
- The receiver can reset the first timer to the first initial value. The receiver may start a second timer corresponding to the second initial value (e.g., 0) for the next sensing signal (e.g., time interval C). When the second timer expires, the receiver may reset the second timer to the second initial value. Then, the receiver may start counting for the next sensing signal.
- The receiver can terminate this SMC. The termination time is based on the maximum number of resets (e.g., N1 described above). This number may have been determined (or negotiated) between the initiator and the responder during the sensing measurement configuration setup. For example, the transmitter can wait for the first time interval + N1 x the third time interval + α1 before terminating the SMC. Termination may be an efficient option when an object is detected or the responder is detected to be moving (e.g., when UAV (e.g., uncrewed aerial vehicles (drones)) are used as responders).

The information (e.g., SMC setup announcement information) may include the location of the resource element (or resource block) to be allocated for the first sensing measurement data report and the transmitter (e.g., device 1 in Fig. 10a and Fig. 10b) for subsequent periodic sensing measurement data reports. The information (e.g., SMC setup announcement information) may include the fourth time interval (e.g., time interval D) in Fig. 10a and Fig. 10b. The fourth time interval is a value representing a fixed interval between sensing measurement data reports.

For example, a receiver (e.g., device 2) may periodically transmit detected measurement data reports. In addition to the fourth time interval, the SMC announcement information may include information on the maximum reset number N4 for which the transmitter (e.g., device 1) may wait without receiving the next sensing measurement data report N4 times. Assuming that the value of N4 is semi-static regardless of the fourth time interval D, the value of N4 can be set by RRC common or RRC UE-specific parameters.

The receiver may transmit the sensing measurement data report periodically or in a predetermined pattern.

Upon receiving the first sensing measurement data report, the transmitter may start a timer for the fourth time interval.

The timer starts from an initial value (e.g., 0).

The fourth time interval may include a predefined offset value.

The predefined offset value α4 can be included separately in the sensing measurement configuration setup information as an additional time offset. The predefined offset value can be set by RRC common or RRC UE-specific parameters.

When the second sensing measurement data report is received, the timer stops and resets to its initial value.

When the timer based on the fourth time interval expires, the operation as shown in the following example may be applied:

The sender may reset the timer to its initial value and start the timer for the next sensing measurement data report.

The transmitter can terminate the SMC. The timing of the termination is based on the maximum number of resets (e.g., N4 above). This number may have been predetermined (or negotiated) between the initiator and responder during the setup of the sensing measurement configuration setup . For example, the initiator may wait N4 x 4 time intervals + α4 before terminating. Termination may be an efficient option when an object is detected or when the responder is detected to be moving (e.g., uncrewed aerial vehicles (UAVs), or drones, are used as responders). With this timer (e.g., a timer based on a time interval D), the sender knows exactly when to monitor (or wake up). The sender receives a report of the sensing measurement data, which enables power-efficient operation.

The information (e.g., SMC setup announcement information) may include the second time interval (e.g., time interval B) of FIGS. 10a and 10b. Here, the sender (e.g., device 1) expects to receive the first sensing measurement data report within the time interval B. In addition to the second time interval, the SMC announcement may include information that the maximum number of resets that the sender can perform is N2. You can wait for the next sensing measurement data report without receiving it N2 times. Assuming that the value of N2 is semi-static regardless of the third time interval B, the value of N2 may be configured by RRC common or RRC UE specific parameters.

The second time interval should be considered based on the air time the sender expects to receive the sensing measurement data report.

The first timer for the second time interval starts when the first sense signal is sent. The timer starts from the 1st initial value (for example, 0).

The second time interval may include a predefined offset value.

The predefined offset value α2 may be separately included in the sensing measurement configuration setup information as an additional time offset. The predefined offset value may be configured by RRC common or RRC UE specific parameters.

When the transmitter receives the first sensing measurement data report, it shall stop the first timer and reset it to the first initial value.

When the timer based on the second time interval expires, the following operations can be applied

The transmitter resets the first timer to the first initial value. The transmitter may start counting the second timer corresponding to the time interval from the second initial value (e.g., 0) for the next sensing measurement data report (e.g., time interval D). When the second timer expires, the transmitter may reset the second timer to the second initial value and start the timer for the next sensing measurement data report.

The transmitter may terminate this sensing measurement configuration.

The timing of the termination is determined by a predetermined reset number (e.g., N2 above). This number may have been determined (or negotiated) between the initiator and responder during the setup of the sensing measurement configuration. For example, the transmitter may wait 2 time intervals + N2 x 4 time intervals + α2 before terminating.

Termination may be an efficient option when detecting an object or when detecting that the responder is moving (e.g., an unmanned aerial vehicle (UAV) or drone is used as the responder).

The transmitter (e.g., device 1) handles reporting of all sensing measurement data received within a specific time interval, such as a second time interval, a fourth time interval, or a maximum number of resets for the fourth time interval.

The second example of the present disclosure is described below.

The second example of the present disclosure may be applied to sensing measurements such as those shown in FIG. 10a and FIG. 10b. The second example of the present disclosure may also be referred to as Option 2.

SMC setup announcement information may include information supporting updated (or new) periodic sensing signal transmission and periodic sensing measurement data reporting procedures, depending on the purpose of the service or the appropriate level of service. Such information may also be included for the same service.

Assuming that there are users (including service providers) with sensing capable entities, when a user decides to participate in a specific service, the user of the sensing capable entity can choose how many sensing capable entities to allocate to support/consume resources.

For example, sensing capable entities may participate in sensing services only at specific locations restricted by users or during specific sensing times (e.g., weekdays from 9 a.m. to 5 p.m.). In the examples shown in FIGS. 10a and 10b, device 1 may be the initiator and transmitter, and device 2 may be the responder and receiver. Even if only one device (e.g., UE, base station, etc.) acts as the receiver or responder, the same type of information may apply to each responder and receiver within the group.

According to the second example of the present disclosure, some time intervals may be signaled in a static or semi-static manner. The benefits of dynamically updating some time intervals may be small at the expense of valuable resources, so such signaling may be applied to make the system more efficient. Meanwhile, others may be set by MAC CE (control elements), existing DCI with new interpretations, or new types of DCI for PDCCH (or PUCCH or all resources, as required in the future).

When reusing existing DCIs, an RRC common or RRC UE-specific parameter may be configured to indicate whether dynamic operations for using existing DCIs in the sensing measurement process are enabled.

When reusing existing DCIs, one of the reserved bits or fields can be used to indicate the DCI format to be used for the sensing measurement process.

The MAC-CE value set, existing DCI with interpretation, or new types of DCI can be configured by RRC common or RRC UE-specific parameters. One or more of the following time intervals can be configured by RRC common or RRC UE-specific parameters, and one or more of the following time intervals can be represented in MAC CE or DCI format.

The information (e.g., SMC setup announcement information) may include the location of the resource element (or resource block) to be allocated to the first sensing signal, or a predetermined pattern (e.g., periodic sensing signal) of the sensing signal measured at the receiver (e.g., device 2 in FIG. 10a and FIG. 10b).

The location can be identified by searching the search space, such as PDCCH monitoring for COntrol REsource SET (CORESET), to find the DCI.

CORESET is a set of physical resources (i.e., specific areas of the downlink resource grid) and a set of parameters used to carry PDCCH/DCI. The CORESET area is limited to a specific area of the frequency domain.

The information (e.g., SMC setup announcement information) may include a value representing a predetermined interval between sensing signals, including the third time interval (e.g., time interval C) in Fig. 10a and Fig. 10b. For example, sensing signals are periodically transmitted from a transmitter (e.g., device 1). In addition to the third time interval, the sensing measurement configuration announcement information may include information on the maximum reset count N3, which indicates the maximum number of times the receiver can wait without receiving the next sensing signal. Assuming that the value of N3 is independent of the third time interval C, it may be configured via RRC common parameters or RRC UE-specific parameters.

Sensing signals are transmitted periodically or in a predetermined pattern.

When the first sensing signal is received, a timer for the third time interval starts.

The timer starts based on an initial value (e.g., 0).

The third time interval may include a predefined offset value.

The predefined offset value α3 can be included separately in the sensing measurement configuration setup information as an additional time offset. The predefined offset value can be configured by RRC common or RRC UE-specific parameters.

When the receiver receives the second sensing signal, the timer stops and is reset to its initial value.

When the third time interval expires, the following operation may be applied:

The receiver may reset the timer to its initial value and start timer calculation for the next sensing signal.

The receiver may terminate the sensing measurement configuration.

The termination time is based on the maximum number of resets (e.g., N3 above). This number may have been determined (or negotiated) between the initiator and the responder during the sensing measurement configuration setup . For example, the receiver may wait for N3 x the third time interval + α3 before terminating.

Termination may be an efficient option when an object is detected or the responder is detected to be moving (e.g., when a UAV (unmanned aerial vehicle or drone) is used as the responder).

With this timer, the receiver can monitor (or wake up) the sensing signal and accurately determine when to receive it, enabling power-efficient operation.

Such timers can be set by a new type of DCI in MAC CE or PDCCH.

The information (e.g., SMC setup announcement information) may include a first time interval (e.g., time interval A) shown in Fig. 10a and Fig. 10b. The first time interval (e.g., time interval A) in FIGS. 10a and 10b may refer to the time at which the receiver (e.g., device 2 in Figures 10a and 10b) is expected to receive the first sensing signal within time interval A. In addition to the first time interval, the SMC announcement may include information related to a maximum reset count N1. The maximum reset count N1 may indicate the number of times the receiver can wait without receiving the next sensing signal N times after receiving the first sensing signal. Assuming that the value of N1 is independent of the first time interval A, it may be configured by RRC common or RRC UE-specific parameters.

Upon receiving the sensing measurement configuration setup announcement, the receiver may start a first timer for the first time interval. The first timer starts from a first initial value (e.g., 0).

The first time interval may include a predefined offset value.

The predefined offset value α1 may be included separately in the sensing measurement configuration setup information as an additional time offset. The predefined offset value may be configured by RRC common or RRC UE-specific parameters.

The first timer stops when the first sensing signal is received, and the first initial value is reset.

When the first timer expires based on time interval A, the following operation may be applied:
- The receiver may reset the first timer to the initial value and start the second timer corresponding to the time interval (e.g., time interval C) from the second initial value (e.g., 0). When the second timer expires, the receiver can reset the second timer to the second initial value and start counting for the next sensing signal.
- The receiver can terminate this sensing measurement configuration. The point at which the receiver terminates can be based on the maximum number of resets (e.g., N1 above). This number may have been determined (or negotiated) between the initiator and the responder during the sensing measurement configuration setup . For example, the transmitter may wait for the first time interval + N1 x the third time interval + α1 before terminating. Termination can be an efficient option when an object is detected or when the responder (e.g., UAV) is detected to be moving.

A timer based on time interval A can be set by RRC.

The information may include the location of the resource element (or resource block) to be allocated to the first sensing measurement data report and the transmitter (e.g., device 1 in Fig. 10a and Fig. 10b) for subsequent periodic sensing measurement data reports.

The information (e.g., SMC setup announcement information) may include the fourth time interval (e.g., time interval D) in FIG. 10a and FIG. 10b, which represents a predetermined interval between sensing measurement data reports. For example, sensing measurement data reporting is periodically transmitted from the receiver (e.g., device 2). In addition to the fourth time interval, the SMC announcement information may include maximum reset number N4 information. The N4 information may refer to N4, which is the maximum number of times that the transmitter (e.g., device 1) can wait without receiving the next sensing measurement data reporting. Assuming that the value of N4 is independent of the third time interval D, it can be configured by RRC common or RRC UE-specific parameters.

The sensing measurement data report is transmitted from the receiver periodically or in a predetermined pattern.

Upon receiving the first sensing measurement data report, the transmitter (e.g., device 1) starts a timer for the fourth time interval. The timer starts from an initial value (e.g., 0).

The fourth time interval may include a predefined offset value.

The predefined offset value α4 can be separately included in the sensing measurement configuration setup information as an additional time offset. The predefined offset value can be configured via RRC common or RRC UE-specific parameters.

Upon receiving the second sensing measurement data report, the timer stops and resets to its initial value.

When the timer based on time interval D expires, the following operations may apply:
- The transmitter can reset the timer to its initial value and start timer calculation for the next sensing measurement data report.
- The transmitter can terminate the sensing measurement configuration. The termination timing is based on the maximum reset count (e.g., N1 above). This number may have been pre-determined (or negotiated) between the initiator and responder during the sensing measurement configuration setup . For example, the transmitter may wait for N4 x the fourth time interval + α4 before terminating. Termination may be an efficient option when an object is detected or the responder moves (e.g., when a UAV (unmanned aerial vehicle or drone) is used as the responder).
- This timer allows the sender to know exactly when monitoring is to be performed (or when power save mode is to be released) and to receive a sensing measurement data report, enabling power-efficient operation.

The timer based on time interval D can be set by a new type of DCI in MAC CE or PDCCH.

The information (e.g., SMC setup announcement information) may include a second time interval (e.g., B) shown in FIGS. 10a and 10b. Here, the transmitter (e.g., device 1) expects to receive the first sensing measurement data report within time interval B. In addition to the second time interval, the SMC announcement may include information about the maximum number of resets N2 that the transmitter can perform. The transmitter waits without receiving the next sensing measurement data report for N2 times. Assuming that the value of N2 is independent of the third time interval B, it can be configured by RRC common or RRC UE-specific parameters.

The second time interval should be considered based on the broadcast time at which the transmitter expects to receive the sensing measurement data report.

When the first sensing signal is transmitted, the transmitter starts a first timer for the second time interval.

The first timer starts based on a first initial value (e.g., 0).

The second time interval may include a predefined offset value.

The predefined offset value α2 can be included separately in the sensing measurement configuration setup information as an additional time offset. The predefined offset value can be configured by RRC common or RRC UE-specific parameters.

The first timer is stopped when the first sensing measurement data report is received and reset to the first initial value.

When the timer based on time interval B expires, the following operation may be applied:
- The transmitter resets the first timer to the first initial value and can start the second timer from the second initial value (e.g., 0) for the next sensing measurement data report (e.g., time interval D). When the second timer expires, the transmitter resets the second timer to the second initial value and can start counting for the next sensing measurement data report.
- The transmitter may terminate this sensing measurement configuration. The timing of termination by the transmitter is determined based on a predetermined reset number (e.g., N2 above). This number may be determined (or negotiated) between the initiator and the responder during the sensing measurement configuration setup . For example, the transmitter may wait for the second time interval + N2 x the fourth time interval + α2 and then terminate. Termination can be an efficient option when an object is detected or the responder moves (e.g., when using a UAV (unmanned aerial vehicle or drone) as the responder).

The transmitter (e.g., device 1) processes all sensing measurement data reports received within the second time interval, the fourth time interval, or a specific time interval corresponding to the maximum reset count for the fourth time interval.

The second time interval and/or the fourth time interval may be set by the RRC.

The time intervals A and B may be static or semi-static, but other values may be dynamically updated for various sensing measurement configuration setup configurations.

The third example of the present disclosure is described below.

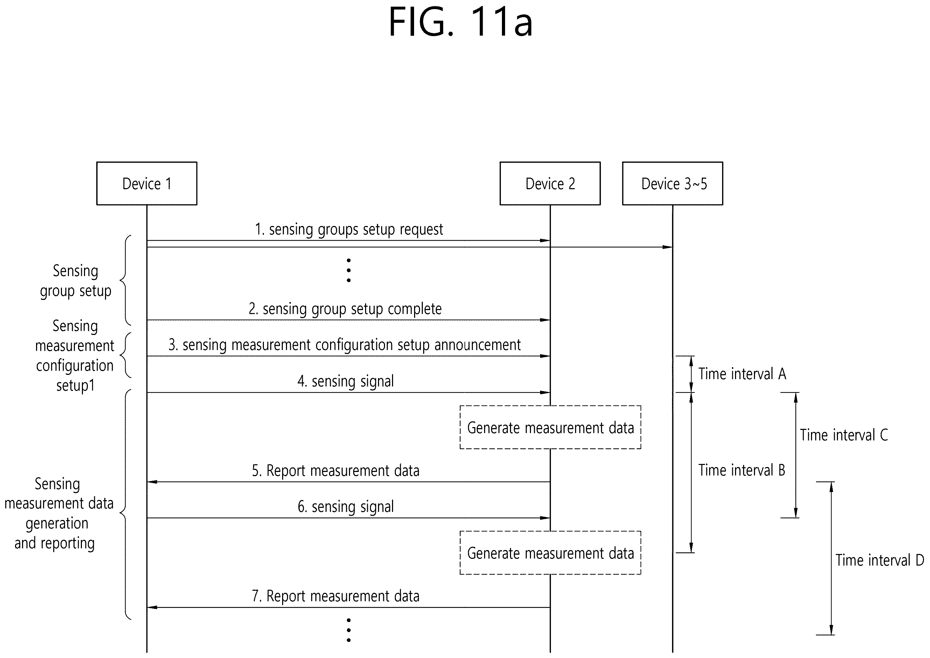

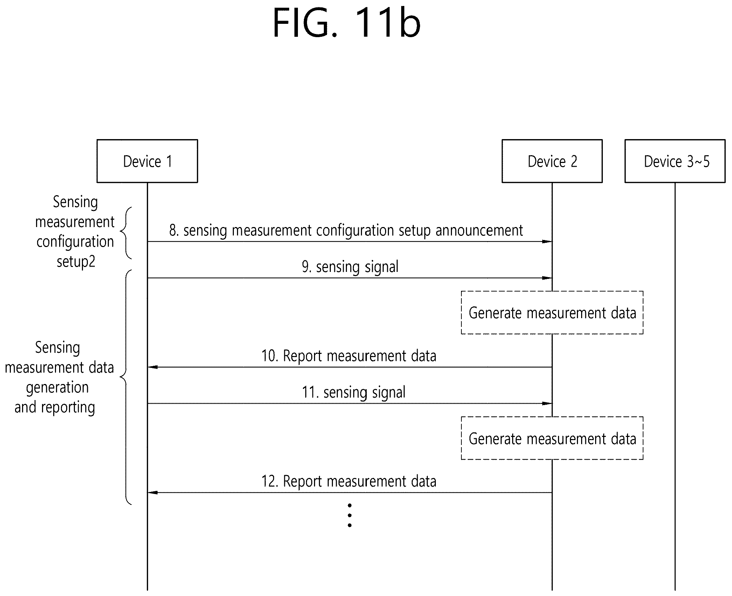

The third example of the present disclosure can be applied to sensing measurements such as those shown in FIGS. 10a and 10b, and FIGS. 11a and 11b. The third example of the present disclosure can also be referred to as option 3.

According to the third example of the present disclosure, the second time interval (e.g., time interval B in FIGS.11a and 11b) may be different from the second time interval (e.g., time interval B in FIGS.10a and 10b) in the first and second examples of the present disclosure. In the examples of FIGS. 11a and 11b, the remaining procedures except for the second time interval are the same as those in FIGS. 10a and 10b.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIGS. 11a and 11b show a second example of a procedure related to sensing measurement according to an embodiment of the present disclosure.

In the examples of FIGS. 11a and 11b, the description of the second time interval (time interval B) may differ from the examples of FIGS. 10a and 10b. Except for the description of the second time interval (time interval B), steps 1 through 12 may be performed in the same manner as steps 1 through 12 in FIGS.10a and 10b.

The information may include a second time interval during which the transmitter (e.g., device 1) expects to receive one or more sensing measurement data reports within time interval B.

The timer for the second time interval starts when the first sensing signal is transmitted.

The second time interval may include a predefined offset value.

The timer stops when it expires.

During the second time interval, the transmitter may periodically or based on a predetermined pattern transmit sensing signals. This operation may be performed regardless of the reception of one or more sensing measurement data reports.

Sensing measurement data reports can be received periodically in response to the sensing of the corresponding transmission signal.

Sensing measurement data reports can be received in the order corresponding to the sequence number at the time the sensing signal was transmitted.

Sensing measurement data reports may include timestamp-related information indicating that the time at which the sensing data was carried was measured at the receiver (responder).

Two or more sensing measurement data reports can be received within a relatively short period of time while the sensing signal is transmitted in a predetermined pattern.

Additional processes may vary depending on the implementation.

When a timer based on a second time interval (e.g., time interval B) expires, the following operation may be applied:
- If the transmitter does not receive a sensing measurement data report within the second time interval, the transmitter may terminate this sensing measurement configuration.
- The transmitter may ignore sensing measurement data reports received after the timer expires.
- Additional processes may vary depending on the implementation.

The difference between the second time interval (e.g., time interval B) in the third example of the present disclosure and the second time interval in the first or fourth example of the present disclosure is as follows. According to the third example of the present disclosure, the second time interval (e.g., time interval B) is not interrupted when the transmitter receives the measurement data, but only when the timer expires.

The fourth example of the present disclosure is described below.

The fourth example of the present disclosure can be applied to sensing measurements such as those shown in FIGS. 10a and 10b. The fourth example of the present disclosure can also be referred to as option 4.

If the transmitter (e.g., device 1 in FIGS. 10a and 10b, and FIGS. 11a and 11b) does not receive the first measurement data report within the B time interval, it waits for the next measurement data report within the fifth time interval.

The fifth time interval can be set to a multiple (N) of the time interval B + time interval D. In various examples of the present disclosure, N can be an integer. Assuming that the value of N is semi-positive regardless of the second time interval B, it can be configured as common to RRC. Alternatively, it can be an RRC UE-specific parameter.

When a sensing signal is transmitted, a timer for the fifth time interval starts.

The fifth time interval may include a predefined offset value.

The timer stops when it expires.

When the timer based on the fifth time interval expires, the following operation may be applied:
- The transmitter may terminate the sensing measurement configuration.
- The termination point is determined based on a predetermined number (e.g., N above). N may be determined (or negotiated) between the initiator and the responder during the sensing measurement configuration setup .

During the sensing group setup, a responder participating in the sensing process can transmit SMC setup response information in response to receiving SMC setup announcement information.

SMC setup response information can be transmitted in a DCI format. The sensing measurement configuration setup ID can be CRC scrambled in DCI format. SMC setup response information may include the following states:
- The state where the responder has approved the parameters set by the initiator,
- The state where the responder has rejected the parameters set by the initiator,
- The state where the responder is adjusting the parameters set by the initiator.

One or more parameters for sensing measurement are proposed by the responder in the sensing measurement configuration setup response information, which can provide better awareness of the situation, especially in mobility.

The initiator can send sensing measurement configuration setup completion information to one or more respondents.

Sending SMC setup completion information to respondents in the accept state means that the initiator has confirmed that the respondents have accepted the configuration parameters set by the initiator.

Sending SMC setup completion information to respondents in the adjust state means that the initiator has accepted the configuration parameters set by the respondents.

Sending SMC setup completion information to a responder in the rejected state means that the initiator has confirmed that the responder has rejected the configuration parameters set by the initiator and that the responder has not proposed any configuration parameters.

To conserve resource elements, the initiator does not need to send SMC setup completion information to the responder in the rejected state.

To perform additional tasks for the sensing measurement configuration setup , the initiator can update information related to the sensing measurement configuration. One or more sensing measurement configurations for sensing measurement data can be updated with a new interval for the measurement time. The remaining configuration for sensing of measurement data remains the same. One or more sensing measurement configurations for sensing measurement data can be updated with a new interval for the reporting time. The remaining configuration for sensing of measurement data remains the same.

Additional sensing measurement tasks can be initiated using the second sensing measurement configuration setup ID before the sensing measurement using the first sensing measurement configuration setup ID is completed. A single respondent may participate in one or more sensing measurement configuration setups.

One or more of the examples described in the first to fourth examples of the present disclosure may be combined. The following describes operations that can be applied to the first to fourth examples of the present disclosure.

After successful sensing measurement configuration setup, sensing measurement data generation and reporting can be performed. The general operation of sensing measurement data generation and reporting is shown in Figure 9 described above. After the sensing group setup and SMC setup are completed, the transmitter can send a sensing signal. Additionally, two or more transmitters can send sensing signals. The receiver or initiator can trigger one or more transmitters to send a sensing signal (or sensing signals). The receiver can measure and report the transmitted sensing signals according to the configuration pre-set during the SMC setup.

After successful sensing measurement data generation and reporting, SMC shutdown or sensing group shutdown can be performed. In general, termination can be explicitly or implicitly performed by either the initiator or the responder.

In the case of SMC termination, the SMC may be terminated in an implicit manner, after a predefined time period in which the SMC waits for expected information. In case of explicit termination, the first information indicating the termination of the SMC may be used. The first information indicating the termination of the SMC may be sent by the initiator or transmitter, or may be sent by the responder or receiver. In this context, the first information may refer to information related to the termination of the SMC. The first information may also be referred to as termination information. The first information may include an SMC setup ID. The first information may include a sensing group setting ID. In this case, the same SMC Setup ID may be assigned to different Sensing Group IDs. The initiator may terminate the SMC for all participants simultaneously. The initiator may terminate one or more SMCs for one or more specific responders. One or more responders can also terminate their own SMCs.

For example, to indicate that all SMCs have been shut down regardless of their SMC Setup ID, the shutdown information might include the SMC Setup ID set to a specific value (e.g., F). In the example described earlier, shutdown was performed based on the SMC Setup ID. In this case, if Device 2 receives an SMC Setup ID with the SMC Setup ID set to a specific value (e.g., F), all configurations may be terminated, regardless of the SMC Setup ID value set on Device 2.

For sensing group termination, in an implicit manner, the sensing group may be terminated after a predefined time to wait for expected information. Here, the predefined value may be set by an RRC common parameter or an RRC UE specific parameter. If terminated in an explicit way, the first information indicating the termination of the sensing group may be used. The first information indicating the termination of the SMC may be transmitted by the initiator or transmitter, or by the responder or receiver. Here, the first information may refer to information related to the termination of the SMC. The first information may also be referred to as termination information. The information may include a sensing group setup ID. The sensing group may be terminated simultaneously for all participants by the initiator. The initiator may terminate one or more sensing groups for one or more specific responders. One or more Responders may terminate their own Sensing Groups. When a sensing group with SGID set to A is terminated, SMCs with SGID set to A may be implicitly terminated. The first information may include a sensing group setup ID set to a specific value (e.g., F) to indicate that all sensing groups have been terminated, regardless of their own sensing group setup IDs.

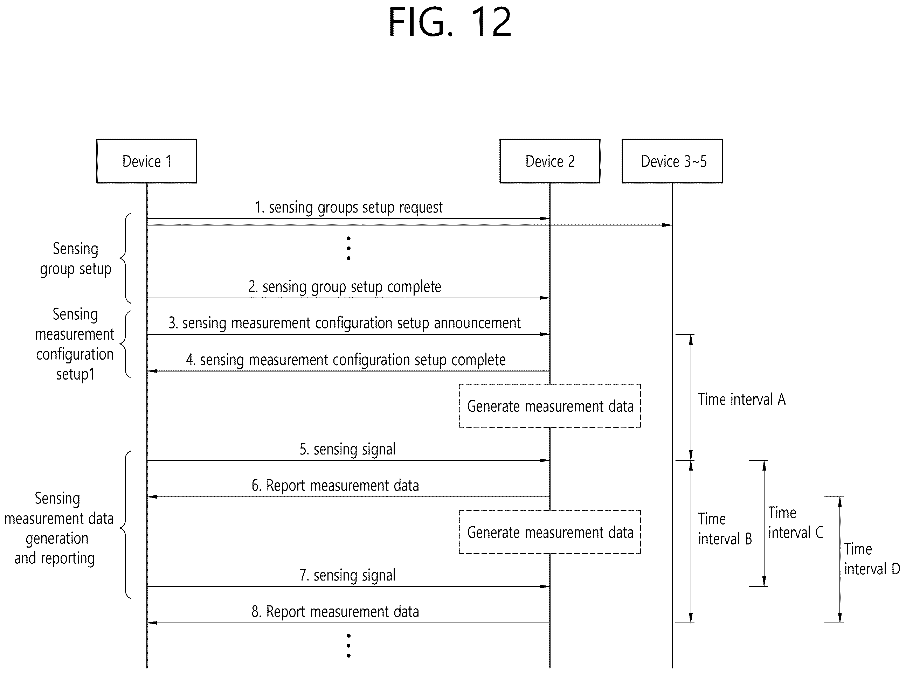

For additional embodiments, various sensing measurement configuration setup procedures may be considered as shown in FIGS. 12 to 15. The various operations described above may also be applied to the examples shown in FIGS. 12 to 15 below.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 12** **shows a third example of a procedure related to sensing measurement according to an embodiment of** the **present disclosure.**

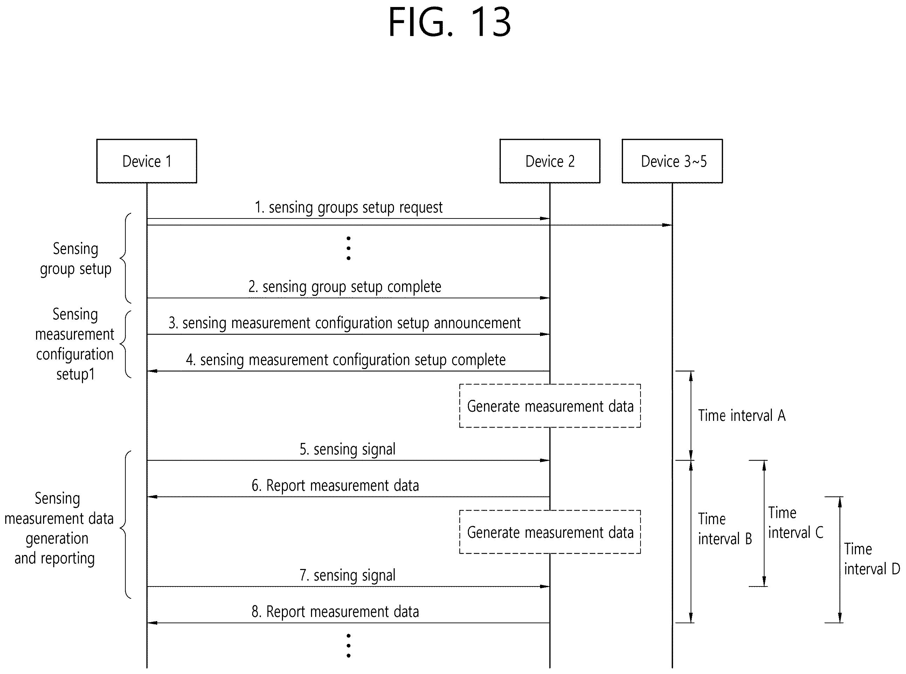

**FIG. 13** **shows a fourth example of a procedure related to sensing measurement according to an embodiment of**

### the present disclosure.

According to the examples shown in FIGS. 12 and 13, the following operations can be performed.
1. Device 1 may transmit a sensing group setup request to devices 2 to 5.
2. Device 1 may transmit sensing group setup completion information to device 2.
3. Device 1 may transmit SMC setup announcement information to members of the sensing group (e.g., device 2). Device 1 may perform SMC setup 1 for the sensing group including device 2. For example, device 1 may perform measurement according to SMC based on SMC ID 1.
4. Device 2 may transmit SMC setup completion information to device 1.
5. Device 1 may transmit sensing signals.
6. Device 2 may generate measurement data. And device 2 may report measurement data.
7. Device 1 may transmit sensing signals.
8. Device 2 may generate measurement data. And device 2 may report measurement data.

In the example of FIG. 12, a timer based on time interval A may start after receiving the SMC setup announcement information. In the example of FIG.13, a timer based on time interval A may start after transmitting the SMC setup completion message.

Note that the time intervals A through D shown in Figures 12 and 13 can be set in the same manner as the time intervals A through D described with reference to the examples in FIGS. 9 through FIG. 11a and FIG.11b.

In FIGS. 12 and 13, during the sensing measurement process of the sensing group configuration, respondents who joined the sensing measurement process can transmit SMC setup completion information in response to receiving SMC setup announcement information. According to the examples in FIGS. 12 and 13, it is assumed that the responder must accept (or reject) the parameters set for the sensing measurement set by the initiator. Accordingly, the initiator (e.g., device 1) confirms that the responder has properly received the corresponding sensing measurement setting information.

In order to apply the concept of time intervals described in FIGS. 10a, 10b, 11a, and 11b, the present embodiment may further consider additional (or expected) air time corresponding to the sensing measurement configuration setup completion information in Figure 12.

For example, with respect to the time intervals described in FIGS. 10a and 10b and FIGS. 11a and 11b, according to the example in FIG. 13, the time at which the timer based on time interval A starts may be the time at which the SMC setup completion message is transmitted. According to the embodiment shown in FIG.13, the timing at which the corresponding timer and timer interval (e.g., time interval A and its associated timer) start may be further considered.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

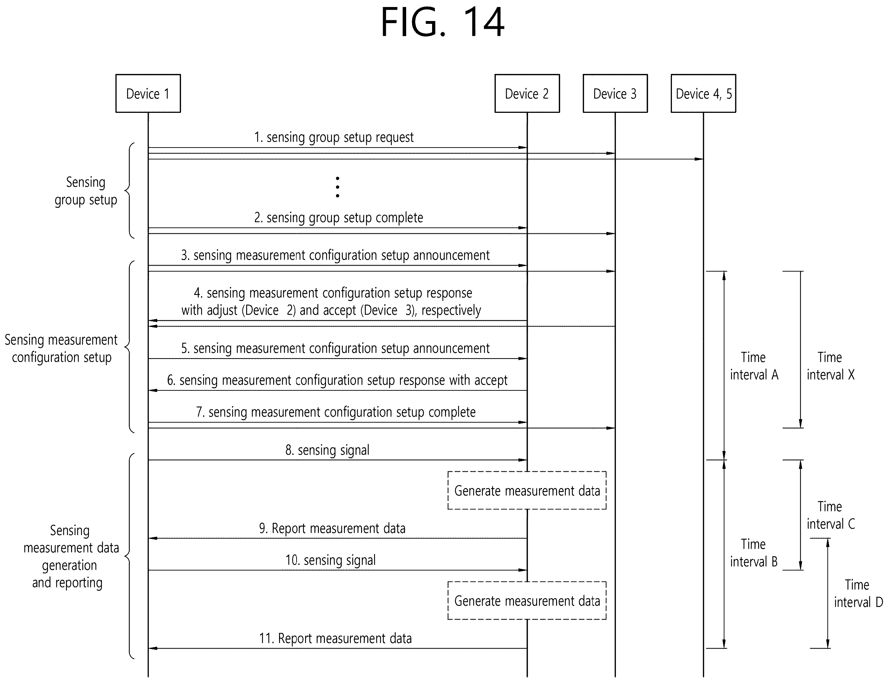

**FIG. 14** **shows a fifth example of a procedure related to sensing measurement according to an embodiment of the present disclosure.**

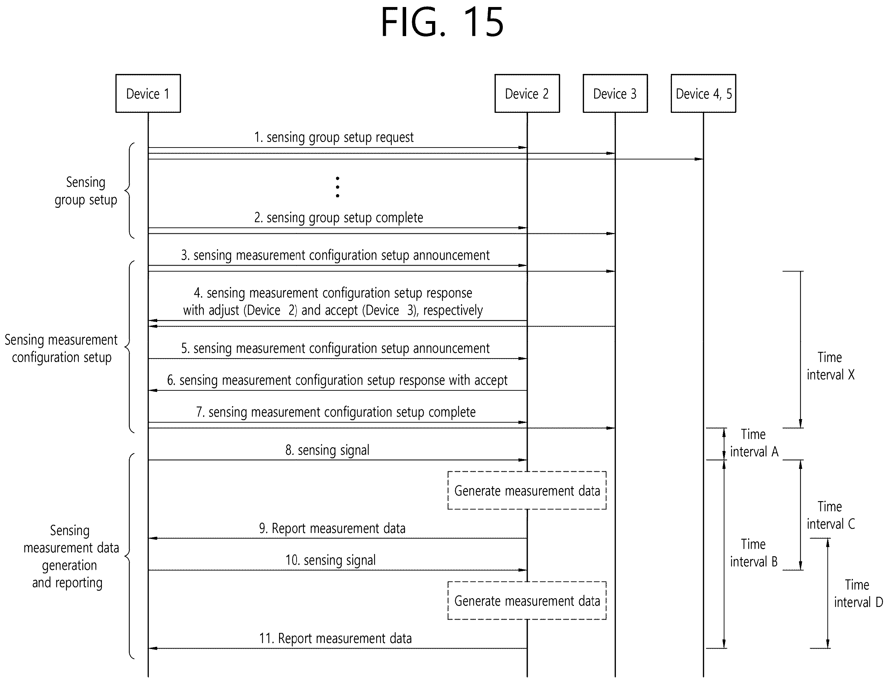

**FIG. 15** **shows a sixth example of a procedure related to sensing measurement according to an embodiment of the present disclosure.**

In FIGS. 14 and 15, the following operations may be performed.
1. Device 1 may transmit a sensing group setup request message to one or more candidate responders (e.g., devices 2 to 5). Device 1 may transmit this message to the candidate responders.
2. Device 1 may transmit a sensing group setup complete message. Device 1 may transmit a sensing group setup complete message to devices included in the sensing group (e.g., device 2, device 3).
3. Device 1 may transmit sensing SMC announcement information.
4. Device 2 and device 3 can transmit SMC setup response messages to device 1. For example, device 2 may transmit a response message including status information indicating adjustment. Device 3 may transmit a response message including status information indicating acceptance.
5. Device 1 may transmit SMC setup announcement information to device 2 that has transmitted status information indicating that it is ready for adjustment.
6. Device 2 may transmit SMC setup response information including status information indicating acceptance to device 1.
7. Device 1 may transmit an SMC setup completion message to devices 2 and 3.
8. Device 1 may transmit a sensing signal. Note that in the examples shown in Figures 14 and 15, the sensing signal is transmitted only to device 2, but this is only an example. For example, device 1 can also transmit the sensing signal to device 3.
9. Device 2 may generate measurement data based on the sensing signal. Device 2 can report the measurement data to Device 1.
10. Device 1 may transmit a sensing signal.
11. Device 2 may report the measurement data.

In the examples shown in FIGS. 14 and 15, the timer based on time intervals A to D can be set based on the contents described in the examples shown in FIGS. 9 to 13.

In FIGS. 14 and 15, when a responder receives the sensing measurement configuration setup announcement information, some responders can negotiate the setup parameters for the sensing measurement with the initiator. Additionally, negotiation may be completed within a specific time interval. The specific time interval may be set by RRC common or RRC UE-specific parameters, assuming that the time interval is either half-positive or positive. SMC setup completion information must be transmitted within a specific time interval (e.g., time interval X in FIGS. 14 and 15).

Specifically, once all negotiations between the Initiator and the Responder are complete, the Initiator can transmit SMC setup completion information. In order to apply the concept of time intervals described in FIGS. 10a, 10b, 11a, and 11b, in the present embodiment, an additional (or expected) waiting time corresponding to one of the sensing measurement configuration setup completion information and the sensing measurement configuration setup request/response information may be further considered.

In order to apply the concept of time intervals described in FIGS. 10a, 10b, 11a, and 11b, in the example shown in FIG. 15, the timing at which the timer based on time interval A starts may be changed. For example, this embodiment may consider the timing at which the corresponding timer and timer interval (e.g., time interval A and its associated timer) starting in FIG. 15 can be considered in the same manner as in the example of FIG. 15.

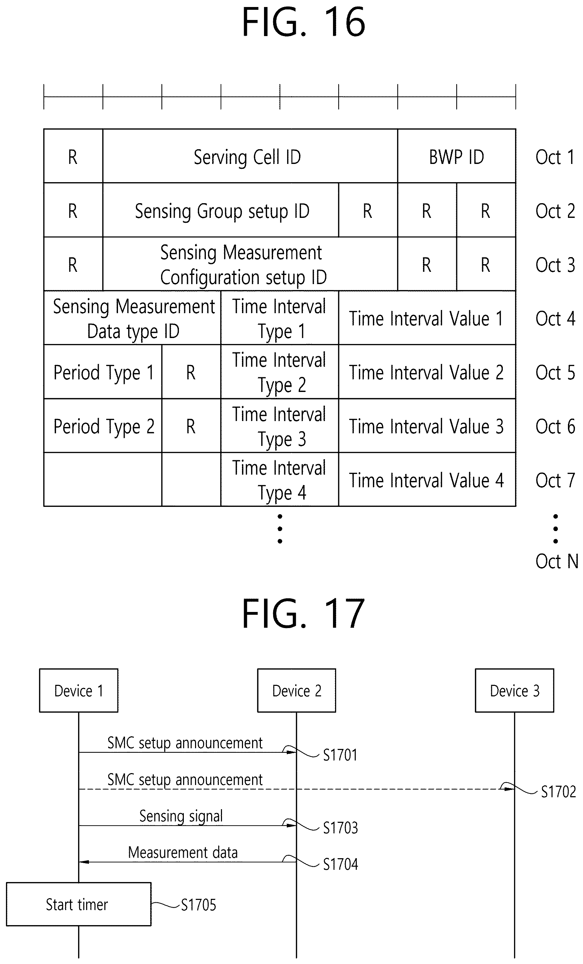

Below, with reference to the example in FIG. 16, an example of SMC setup announcement information will be explained. The information shown in the example in FIG. 16 may be included in the SMC setup announcement information.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 16** **shows an example of SMC setup announcement information according to an embodiment of the present disclosure.**

In the example in FIG. 16, Oct means octet.

FIG. 16 shows a MAC CE that includes an example of fields for sensing measurement configuration setup announcement information. Fields may be added or removed depending on the sensing measurement process. The field positions and sizes of the MAC CE may vary depending on the sensing measurement process. Some fields in Figure 16 may be set as RRC common or RRC UE-specific parameters, while the remaining fields are displayed via the MAC CE.
- Serving Cell ID: This field indicates the identifier of the serving cell to which MAC CE is applied.
- BWP ID: This field indicates the BWP (Bandwidth part) to which MAC CE is applied. Here, BWP may be a set of consecutive physical resource blocks selected from a consecutive subset of common resource blocks for a given carrier and a given numerology.
- Sensing Group Setup ID: This field indicates the identifier of the sensing group to which MAC CE is applied.
- Sensing Measurement Configuration Setup ID: This field indicates the ID of the sensing measurement configuration setup to which MAC CE is applied.
- Sensing Measurement Data Type ID: This field indicates the type of sensing measurement data to be measured and reported by the receiver.
- Time Interval Type and Time Interval Value: If different time intervals are specified, these two fields indicate the time interval type and duration, respectively.
- Period Type: This field indicates the period length or a predefined pattern.
- R: Reserved bit. Set to 0.

Hereinafter, with reference to Figure 17, an example of a procedure according to various examples of the present disclosure will be described.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIG. 17 shows an example of a procedure according to an embodiment of the present disclosure.

Referring to FIG. 17, devices 1 to 3 are shown.

For reference, as described above, devices 1 to 3 may be interpreted as UE, gNB, or other 3GPP entities. For example, devices 1 to 3 may all be UE. For example, devices 1 to 3 may all be gNB. For example, device 1 may be gNB, and devices 2 and 3 may be UE.

Furthermore, although devices 1 to 3 are shown in the example of FIG. 17, this is only an example, and the scope of the present disclosure is not limited by FIG. 17. In the example of FIG. 17, devices 2 and 3 can be interpreted as candidate responders or responders. The operation according to an embodiment of the present disclosure may also be performed when there is one or three or more candidate responders or responders. Devices 1 to 3 may also perform operations not shown in the example of Fig. 17 among the operations according to various examples of the present disclosure.

For example, devices 1 to 3 shown in the example of FIG. 17 can perform the operations described in the examples of FIGS. 1 to 16.

Before performing the operation according to the example in FIG. 17, devices 1 to 3 may perform the operation according to the examples in FIGS. 5 to 9. For example, devices 1 to 3 may perform a registration procedure.

In step S1701, device 1 can transmit an SMC setup announcement to device 2. The SMC setup announcement may include sensing measurement configuration information. The sensing measurement configuration information may include a first time interval related to the transmission interval of measurement data. Here, the first time interval may refer to the time interval D in the examples shown in Figures 9 to 16. The sensing measurement configuration information may further include a first maximum reset number and a first offset value related to the first time interval. The first maximum reset number may be N4 described above. The first offset value may be α4 described above.

In step S1702, device 1 may also transmit the SMC setup announcement to device 3. For example, step S1702 may be performed when the sensing group includes both device 2 and device 3.

In step S1703, device 1 may transmit the first sensing signal to device 2. In the example shown in FIG. 17, the first sensing signal is transmitted only to device 2, but this is merely an example. Device 1 may transmit the first sensing signal to devices included in the same sensing group as device 2. Device 2 may generate the first measurement data based on the first sensing signal.

In step S1704, device 2 may transmit the first measurement data to device 1.

In step S1705, device 1 may start a timer. Device 1 can start the timer based on receiving the first measurement data from device 2. Here, the timer is a timer based on a first time interval. That is, the timer may be, for example, a timer based on the time interval D described in the examples of FIGS. 9 to 16 above.

When the first timer expires, device 1 may determine whether to terminate using the sensing measurement setting information.

When the first timer expires, device 1 may reset the first timer. If device 1 does not receive additional measurement data from device 2 until the first timer expires, the first timer may be reset. Device 1 may reset the first timer multiple times (e.g., up to the first maximum reset number). If Device 1 resets the first timer up to the first maximum reset count, after the first timer expires, Device 1 may decide whether to stop using the sensing measurement setting information.

The operation of device 1 terminating the use of the sensing measurement configuration information may be performed, for example, as follows. After device 1 receives the first measurement data, for a period of time equal to the first maximum reset number*first time interval + first offset value, no second measurement data may be received from the second device. In this case, device 1 may decide to terminate using the sensing measurement information.

Device 1 may also transmit a second sensing signal to device 2.

Device 2 may generate second measurement data based on the second sensing signal. Device 2 may transmit the second measurement data to device 1.

Based on the reception of the second measurement data, the device 1 may reset the first timer. That is, the device 1 may restart the first timer.

For reference, before step S1701 is performed, the following operation may be performed. For example, device 1 may transmit a sensing group setup request message to one or more candidate responders including device 2 to set a sensing group. Device 1 may receive response messages from the device 2. Device 1 may determine whether to send a sensing group setup completion message based on the minimum number of responders in the sensing group.

For reference, although only a timer based on time interval D is shown in the example in Figure 17, this is only an example. The operations related to the various timers described in the examples in Figures 9 to 16 may also be applied.

The present disclosure may have various effects.

For example, operations for sensing objects based on 3GPP-based signals can be performed efficiently. For example, resources can be used efficiently in the process of performing the sensing measurement process. In addition, power saving can be improved in the sensing process. For example, operation modes, control signals, or time intervals for power saving of each device can be effectively defined. Furthermore, the defined information can be effectively indicated or configured.

The effects that may be obtained from the specific examples of the present disclosure are not limited to those listed above. For example, there may be a variety of technical effects that a person having ordinary skill in the related art may understand or infer from the present disclosure. Accordingly, the specific effects of the present disclosure are not limited to those expressly set forth herein, but may include a variety of effects that may be understood or inferred from the technical features of the present disclosure.

For reference, the operation of the terminal (e.g., UE) described in the present specification may be implemented by the apparatus of FIGS. 1 to 4 described above. For example, the terminal (e.g., UE) may be the first device 100 or the second device 200 of FIG. 2. For example, an operation of a terminal (e.g., UE) described herein may be processed by one or more processors 102 or 202 . The operation of the terminal described herein may be stored in one or more memories 104 or 204 in the form of an instruction/program (e.g., instruction, executable code) executable by one or more processors 102 or 202. One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE) described in the present disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE) described in the present disclosure of the present specification.

For reference, the operation of a network node (e.g., BM-SC, PCRF, GCSE AS, AMF, SMF, UPF, PCF, AUSF, UDM, etc.) or base station (e.g., (R)AN, NG-RAN, gNB, E-UTRAN, etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing communication, the method performed by a first device and comprising:
performing a registration procedure for a User Equipment (UE) to register with an access and mobility management function (AMF) node,
wherein the registration procedure includes transmitting, by the UE, a registration request message including a registration type and transmitting, by the AMF node, a registration accept message to the UE;
transmitting sensing measurement configuration information to a sensing group including the second device,
wherein the sensing measurement configuration information includes first time interval information related to a transmission interval of measurement data;
transmitting a first sensing signal to the second device;
receiving first measurement data from the second device; and
starting a first timer based on the first time interval based on that the measurement data is received.

2. The method of claim 1, further comprising:
transmitting a second sensing signal to the second device.

3. The method of claim 2, further comprising:
receiving second measurement data from the second device; and
resetting the first timer, based on that the second measurement data is received.

4. The method of any one of claims 1 to 3, further comprising:
resetting the first timer, based on the first timer expires.

5. The method of any one of claims 1 to 4,
wherein the sensing measurement configuration information further includes a first maximum reset number related to the first time interval and a first offset value.

6. The method of claim 5, wherein the resetting, is performed only until the number of times the first timer has been reset is equal to the first maximum reset number.

7. The method of any one of claims 1 to 6, further comprising:
based on the first timer expires, determining whether to terminate using the sensing measurement configuration information.

8. The method of claim 7,
after receiving the first measurement data, based on that no second measurement data is received from the second device for a time period equal to the first maximum number of resets*the first time interval + the first offset value, using the sensing measurement configuration information is determined to be terminated.

9. The method of any one of claims 1 to 8, further comprising:
transmitting a sensing group setup request message for configuring a sensing group to one or more candidate responders including the second device;
receiving a response message from the second device; and
determining whether to transmit a sensing group setup completion message based on the minimum number of responders of the sensing group.

10. A first device configured to operate in a wireless communication system, the first device comprising:
one or more transceivers;
one or more processors; and
one or more memories operably connectable to the at least one processor and storing instructions,
based on that the instructions being executed by the one or more processors, operation performed is a method according to any one of claims 1 to 9.

11. An apparatus in mobile communication comprising:
one or more processors; and
one or more memories operably connectable to the at least one processor and storing instructions, based on that the instructions being executed by the one or more processors, operation performed comprising:
performing a registration procedure for a User Equipment (UE) to register with an access and mobility management function (AMF) node,
wherein the registration procedure includes transmitting, by the UE, a registration request message including a registration type and transmitting, by the AMF node, a registration accept message to the UE;
transmitting sensing measurement configuration information to a sensing group including the second device,
wherein the sensing measurement configuration information includes first time interval information related to a transmission interval of measurement data;
transmitting a first sensing signal to the second device;
receiving first measurement data from the second device; and
starting a first timer based on the first time interval based on that the measurement data is received.

12. A non-transitory Computer Readable Medium (CRM) storing instructions,
based on that the instructions being executed by the one or more processors, operation performed comprising:
performing a registration procedure for a User Equipment (UE) to register with an access and mobility management function (AMF) node,
wherein the registration procedure includes transmitting, by the UE, a registration request message including a registration type and transmitting, by the AMF node, a registration accept message to the UE;
transmitting sensing measurement configuration information to a sensing group including the second device,
wherein the sensing measurement configuration information includes first time interval information related to a transmission interval of measurement data;
transmitting a first sensing signal to the second device;
receiving first measurement data from the second device; and
starting a first timer based on the first time interval based on that the measurement data is received.

13. A method for performing communication, the method performed by a second device and comprising:
performing a registration procedure for a User Equipment (UE) to register with an access and mobility management function (AMF) node,
wherein the registration procedure includes transmitting, by the UE, a registration request message including a registration type and transmitting, by the AMF node, a registration accept message to the UE;
receiving sensing measurement configuration information to a sensing group including the second device,
wherein the sensing measurement configuration information includes first time interval information related to a transmission interval of measurement data;
receiving a first sensing signal to the second device;
generating first measurement data based on the first sensing signal; and
transmitting the first measurement data to the first device.

14. The method of claim 13, further comprising:
receiving a second sensing signal from the first device;
generating second measurement data based on the second sensing signal; and
transmitting the second measurement data to the first device.

15. The method of claim 13 or claim 14,
wherein the second measurement data is transmitted after the first measurement data is transmitted but before a timer based on the first time interval information expires.

16. A second device configured to operate in a wireless communication system, the second device comprising:
one or more transceivers;
one or more processors; and
one or more memories operably connectable to the at least one processor and storing instructions,
based on that the instructions being executed by the one or more processors, operation performed is a method according to any one of claims 14 to 16.
